(19) Europäisches Patentamt
European Patent Office
Office européen des brevets

(11) **EP 3 070 764 B1**

(12) **EUROPEAN PATENT SPECIFICATION**

(45) Date of publication and mention of the grant of the patent:
**30.01.2019 Bulletin 2019/05**

(21) Application number: **14868376.6**

(22) Date of filing: **04.12.2014**

(51) Int Cl.:
***H01M 2/16*** (2006.01) ***B32B 5/30*** (2006.01)
***B32B 27/30*** (2006.01) ***H01M 10/0566*** (2010.01)
***C08F 214/22*** (2006.01) ***C08F 214/26*** (2006.01)

(86) International application number:
**PCT/JP2014/082118**

(87) International publication number:
**WO 2015/083790 (11.06.2015 Gazette 2015/23)**

(54) **SEPARATOR FOR SECONDARY BATTERY, AND SECONDARY BATTERY**

TRENNMITTEL FÜR SEKUNDÄRBATTERIE UND SEKUNDÄRBATTERIE

SÉPARATEUR POUR BATTERIE SECONDAIRE ET BATTERIE SECONDAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**06.12.2013 JP 2013253241**
**04.02.2014 JP 2014019824**
**26.06.2014 JP 2014131691**
**31.07.2014 JP 2014157052**

(43) Date of publication of application:
**21.09.2016 Bulletin 2016/38**

(73) Proprietor: **Daikin Industries, Ltd.**
**Osaka-shi, Osaka 530-8323 (JP)**

(72) Inventors:
- **FUKATANI Tomoyuki**
  **Osaka.shi Osaka 530-8323 (JP)**
- **KITAHARA Takahiro**
  **Osaka-shi**
  **Osaka 530-8323 (JP)**
- **ICHIKAWA Kenji**
  **Osaka-shi**
  **Osaka 530-8323 (JP)**
- **IWAMATSU Yuuko**
  **Osaka-shi**
  **Osaka 530-8323 (JP)**
- **IGUCHI Takashi**
  **Osaka-shi**
  **Osaka 530-8323 (JP)**
- **UCHIDA Kazunobu**
  **Osaka-shi**
  **Osaka 530-8323 (JP)**
- **SAITA Tomohide**
  **Osaka-shi**
  **Osaka 530-8323 (JP)**
- **FUJISAWA Manabu**
  **Osaka-shi**
  **Osaka 530-8323 (JP)**

(74) Representative: **Hoffmann Eitle**
**Patent- und Rechtsanwälte PartmbB**
**Arabellastraße 30**
**81925 München (DE)**

(56) References cited:
**WO-A1-2012/176815** **WO-A1-2014/065258**
**JP-A- 2007 188 777** **JP-A- 2013 219 016**
**US-A1- 2012 268 072** **US-A1- 2014 356 706**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 070 764 B1

## Description

TECHNICAL FIELD

The present invention relates to separators for secondary batteries, and secondary batteries. The present invention specifically relates to a separator suitable for secondary batteries such as lithium secondary batteries, and a secondary battery including the same.

BACKGROUND ART

Non-aqueous secondary batteries typified by lithium secondary batteries have a high energy density and are widespread as main power supplies for portable electronic devices such as mobile phones and laptops. Such batteries are also expected to serve as one of the decisive factors in dealing with the global warming; for example, the batteries are used in electric vehicles (EV). Lithium secondary batteries are required to have a higher energy density and much improved battery characteristics. In addition, to secure the safety is also one technical issue.

The lithium secondary batteries each have a basic structure in which a non-aqueous electrolyte solution and optionally a separator are disposed between a positive electrode and a negative electrode. The separator exists between the positive electrode and the negative electrode to prevent the active materials of the electrodes from being in contact with each other, and to enable the flow of the electrolyte solution through the pores of the separator so as to form a channel for ionic conduction between the electrodes. The separator is also required to have a function (shutdown function) of preventing an excessive current flow by cutting off a current when an abnormal current passes through the battery due to, for example, a short circuit between the positive electrode and the negative electrode. If the temperature of the battery exceeds a usual operation temperature, the separator blocks the microporous membrane to achieve the shutdown function.

Usual separators are porous membranes such as microporous polyolefin films formed from polyethylene or polypropylene, for example. However, such polyolefin porous membranes are easily heat-shrunk, and thus have poor dimension stability at high temperatures. If a lithium ion secondary battery is overheated and the temperature inside the battery continues to increase even after the pores in the separator are blocked, the separator is heat-shrunk and broken to cause an internal short-circuit, which may disadvantageously result in risks such as combustion. In order to improve the safety of batteries at high temperatures, the separator is required to have improved heat resistance.

One technique of improving the heat resistance (heat stability) of the separator is to stack a heat-resistant layer formed from inorganic particles and a binder polymer on a porous membrane.

For example, Patent Literature documents 1 and 2 each propose stacking of a composite porous membrane formed from inorganic particles and a binder polymer on a separator, wherein the binder polymer is a copolymer or blend of vinylidene fluoride and hexafluoropropylene.

As mentioned above, the heat-resistant layer formed on the separator is expected to improve the dimension stability of the separator at high temperatures, and thus to improve the thermal stability of the battery. Still, the vinylidene fluoride/hexafluoropropylene copolymer disclosed in Patent Literature documents 1 and 2 usually dissolves in an electrolyte solution containing a carbonate solvent at 80°C or higher. Thus, the bonding between the inorganic particles by the binder polymer is lost in the cell-operating environment at high temperatures, so that the heat-resistant layer may be disadvantageously collapsed and may fall. As a result, the heat-resistant layer may highly possibly fail to contribute to the effect of improving the heat resistance of the separator. Further, the adhesiveness between the separator and the heat-resistant layer is markedly deteriorated, so that the battery performance is inevitably deteriorated.

Patent Literature 3 proposes formation of a heat-resistant layer on the separator using a mixture of an aramid polymer having low swellability with an electrolyte solution and inorganic particles. However, a polar functional group contained in the aramid polymer highly possibly causes oxidative decomposition at the interface between the positive electrode and the separator, thereby deteriorating the performance of the battery. Since the cell-operating voltage is anticipated to increase in order to deal with a possible increase in the energy density of the lithium secondary batteries, the binder polymer in the heat-resistant layer formed on the separator is required to be formed from a material excellent in oxidation resistance.

Patent Literature 4 proposes use of a copolymer or blend of vinylidene fluoride, tetrafluoroethylene, and hexafluoropropylene as a binder polymer of the composite porous membrane on the separator, but does not refer to the effect of improving the heat resistance and dimension stability at high temperatures of the separator. In the examples of Patent Literature 4, a composite porous membrane of a vinylidene fluoride-based polymer formed from a vinylidene fluoride/tetrafluoroethylene/hexafluoropropylene copolymer and a metal oxide at a ratio of 90/10 (mass%) was formed on a polyolefin separator. Since the proportion of the binder polymer in the composite membrane is high, the effect of improving the heat resistance of the separator is not exerted.

In the case of a separator that includes a composite porous membrane of inorganic particles and a binder

stacked therein, the adhesiveness of the composite porous membrane to the separator is also an important issue. Insufficient adhesiveness between the composite porous membrane and the separator may disadvantageously cause a reduction in the yield in a process of assembling cells by winding electrodes and separators, and dust fall from the composite porous membrane in a process of punching out the separator into a predetermined size and the resulting deterioration in battery performance in the cell-operating environment.

One possible factor that affects the adhesiveness is the molecular weight of the binder polymer. On the contrary, Patent Literature documents 1, 2, and 4 never define the molecular weight that is preferred in terms of adhesiveness in relation to the binder polymer for composite porous membranes included in separators.

CITATION LIST

- Patent Literature

Patent Literature 1: JP 2008-524824 T
Patent Literature 2: JP 2011-515799 T
Patent Literature 3: JP 2008-266593 A
Patent Literature 4: WO 2011/096564

SUMMARY OF INVENTION

- Technical Problem

The present invention aims to provide a separator for secondary batteries which has excellent heat resistance and ion conductivity, which is less likely to be heat-shrunk, which is less likely to swell with an electrolyte solution even at high temperatures, and in which a composite porous membrane including a binder polymer and at least one type of inorganic particles selected from the group consisting of metal oxide particles and metal hydroxide particles firmly bonds to a porous body.

The present invention also aims to provide a secondary battery that is safely operated even in a high-temperature environment.

- Solution to Problem

The present inventors found that the above problems are solved by use of a specific fluoropolymer as a binder and holding a large amount of at least one type of inorganic particles selected from the group consisting of metal oxide particles and metal hydroxide particles on a porous substrate, and thereby completed the present invention.

Since the separator for secondary batteries of the present invention is high in ion conductivity and holds a large amount of the inorganic particles on the porous substrate, the separator is excellent in heat resistance and is less likely to be heat-shrunk. Remarkably, although a large amount of the inorganic particles is held on the porous substrate, the composite porous membrane is unexpectedly less likely to fall from the porous substrate.

Specifically, the present invention relates to a separator for secondary batteries, as defined in claim 1.

The composite porous membrane preferably further includes organic particles.

The porous substrate preferably includes at least one resin reselected from the group consisting of polyethylene, polypropylene, polyimide, polyamide, polyethylene terephthalate, polyester, and polyacetal.

The inorganic particles are preferably present in an amount of 50 to 99 mass% in the composite porous membrane.

The present invention also relates to a secondary battery including: the aforementioned separator for secondary batteries; a positive electrode; a negative electrode; and a non-aqueous electrolyte solution.

- Advantageous Effects of Invention

The separator for secondary batteries of the present invention has excellent heat resistance and ion conductivity, is less likely to be heat-shrunk, and is less likely to swell with an electrolyte solution even at high temperatures, and the composite porous membrane including a binder polymer and at least one type of inorganic particles selected from the group consisting of metal oxide particles and metal hydroxide particles firmly bonds to the porous body.

Thus, a secondary battery including the separator for secondary batteries of the present invention is stably operated even in a high-temperature environment and is high in durability. Further, such a secondary battery is excellent

in high-rate performance and the resistance thereof is less likely to increase even if charge and discharge are repeated at a high voltage.

The secondary battery of the present invention is stably operated even in a high-temperature environment and is high in durability. Further, such the secondary battery is excellent in high-rate performance and the resistance thereof is less likely to increase even if charge and discharge are repeated at a high voltage.

DESCRIPTION OF EMBODIMENTS

The present invention will be described in detail below.

The present invention relates to a separator for secondary batteries including: a porous substrate; and a composite porous membrane disposed on or above the porous substrate, the composite porous membrane including: a fluoropolymer that includes a polymerized unit based on vinylidene fluoride and a polymerized unit based on tetrafluoroethylene; and at least one type of inorganic particles selected from the group consisting of metal oxide particles and metal hydroxide particles, the fluoropolymer including 40 mol% or more of the polymerized unit based on vinylidene fluoride in all the polymerized units and having a weight average molecular weight of 200,000 to 2,000,000, the fluoropolymer being present in an amount of 50 mass% or less in the composite porous membrane, wherein the fluoropolymer further includes less than 3.0 mol% of a polymerized unit based on a monomer copolymerizable with vinylidene fluoride and tetrafluoroethylene in addition to the vinylidene fluoride unit and the tetrafluoroethylene unit, in all the polymerized units of the fluoropolymer.

Thus, the separator for secondary batteries of the present invention has excellent heat resistance and ion conductivity, is less likely to be heat-shrunk, and is less likely to swell with an electrolyte solution even at high temperatures, and the composite porous membrane including a binder polymer and at least one type of inorganic particles selected from the group consisting of metal oxide particles and metal hydroxide particles firmly bonds to the porous substrate.

The separator of the present invention includes a porous substrate and a composite porous membrane disposed on or above the porous substrate.

The composite porous membrane includes a fluoropolymer and at least one type of inorganic particles selected from the group consisting of metal oxide particles and metal hydroxide particles.

The composite porous membrane preferably further includes organic particles.

The fluoropolymer includes a polymerized unit (hereinafter, also referred to as a "VdF unit") based on vinylidene fluoride (VdF) and a polymerized unit (hereinafter, also referred to as a "TFE unit") based on tetrafluoroethylene (TFE).

The fluoropolymer includes 40 mol% or more of the VdF unit in all the polymerized units. The fluoropolymer including the VdF unit in an amount within the above range leads to excellent durability (oxidation resistance) at a high voltage and ion conductivity. If the amount of the VdF unit in all the polymerized units is less than 40 mol%, the composite porous membrane fails to bond to the porous substrate. The amount of the VdF unit is preferably 50 mol% or more and 95 mol% or less, more preferably 93 mol% or less, in all the polymerized units.

The fluoropolymer preferably includes 5 to 60 mol% of the TFE unit in all the polymerized units.

The fluoropolymer including the TFE unit in an amount within the above range leads to excellent durability (oxidation resistance) at a high voltage and ion conductivity. The amount of the TFE unit is more preferably 7 mol% or more and 50 mol% or less in all the polymerized units.

The composition of the fluoropolymer can be determined using an NMR analysis device.

The fluoropolymer further includes a polymerized unit based on a monomer copolymerizable with VdF and TFE in addition to the VdF unit and the TFE unit. The effects of the present invention are sufficiently achieved only by a copolymer of VdF and TFE; still, in order to further improve the adhesiveness, a monomer copolymerizable therewith may be copolymerized to the extent that does not deteriorate the excellent oxidation resistance, ion conductivity, and swellability with a non-aqueous electrolyte solution of the copolymer.

The amount of the polymerized unit based on a monomer copolymerizable with VdF and TFE is preferably 10 mol% or less, more preferably less than 3.0 mol%, in all the polymerized units of the fluoropolymer. If the amount thereof exceeds 10 mol%, the crystallinity of the copolymer of VdF and TFE usually tends to markedly decrease, resulting in an excessive increase in the resistance to swelling with a non-aqueous electrolyte solution.

Examples of the monomer copolymerizable with VdF and TFE include those disclosed in JP H06-172452 A, such as unsaturated dibasic acid monoesters, including monomethyl maleate, monomethyl citraconate, and monoethyl citraconate, maleic acid, maleic anhydride, and vinylene carbonate; and compounds having any of hydrophilic polar groups, such as-$SO_3M$, -$OSO_3M$, -COOM, -$OPO_3M$ (where M is an alkali metal), amine polar groups (e.g., -$NHR^a$ and -$NR^bR^c$, where $R^a$, $R^b$, and $R^c$ are each an alkyl group), an amide group (-CO-$NRR^1$, where R and R' may be the same as or different from each other, and are each a hydrogen atom or an alkyl group that may optionally have a substituent), an amide bond (-CO-NR"-(where R" is a hydrogen atom, an alkyl group that may optionally have a substituent, or a phenyl group that may optionally have a substituent)), and a carbonyl group, as disclosed in JP H07-201316 A.

Preferred among these compounds having any of the above hydrophilic polar groups is a compound having

an amide group and a carbonyl group, particularly preferred is a compound having an amide group.

In the compound having an amide group, the amide group is a group represented by -CO-NRR'. In the formula, R and R' may be the same as or different from each other, and are each a hydrogen atom or an alkyl group that may optionally have a substituent. If R and R' are alkyl groups, they may be linear, cyclic, or branched. The carbon number of each alkyl group is preferably 1 to 30. The carbon number is more preferably 1 to 20. Examples of the substituent include halogen atoms, C1-C30 alkoxy groups, and C6-C30 aryl groups.

The compound having an amide group may be any compound having one or more polymerizable carbon-carbon double bonds and one or more amide groups in the molecule, and is preferably a monomer having one polymerizable carbon-carbon double bond and one amide group in the molecule, represented by the following formula (1):

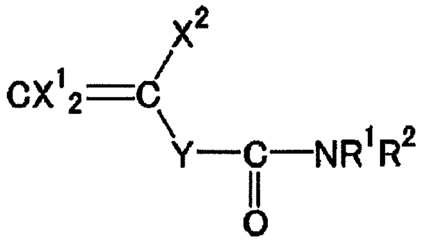

(1)

(wherein $X^1$s may be the same as or different from each other, and are each a hydrogen atom or an alkyl group that may optionally have a substituent; $X^2$ is a hydrogen atom or an alkyl group that may optionally have a substituent; Y is a single bond or an alkylene group that may optionally have a substituent; $R^1$ and $R^2$ may be the same as or different from each other, and are each a hydrogen atom or an alkyl group that may optionally have a substituent). In the formula (1), $X^1$s are each a hydrogen atom or an alkyl group. The two $X^1$s in the formula (1) may be the same as or different from each other. The alkyl group may or may not have a substituent. The alkyl group may be linear, cyclic, or branched. Examples of the alkyl group include those mentioned for the above R and R'.

$X^1$s are each preferably a hydrogen atom or a halogen atom, particularly preferably a hydrogen atom.

In the formula (1), $X^2$ is a hydrogen atom or an alkyl group. The alkyl group may or may not have a substituent. The alkyl group may be linear, cyclic, or branched. Examples of the alkyl group include those mentioned for the above $X^1$. $X^2$ is particularly preferably a hydrogen atom or a methyl group.

In the formula (1), Y is a single bond or an alkylene group. The alkylene group may or may not have a substituent. The alkylene group may be linear, cyclic, or branched. The carbon number of the alkylene group is preferably 1 to 30. The carbon number is more preferably 1 to 25.

Examples of the substituent include those mentioned for the above $X^1$.

In the formula (1), $R^1$ and $R^2$ are each a hydrogen atom or an alkyl group. $R^1$ and $R^2$ may be the same as or different from each other. The alkyl group may or may not have a substituent. The alkyl group may be linear, cyclic, or branched. Examples of the alkyl group include those mentioned for the above $X^1$. $R^1$ and $R^2$ are each preferably a hydrogen atom or a halogen atom, particularly preferably a hydrogen atom.

The compound having an amide group is preferably a (meth)acrylamide represented by the following formula (2):

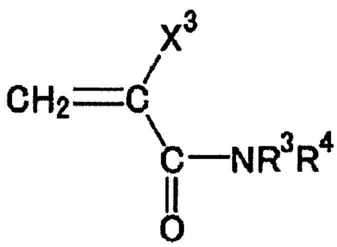

(2)

(wherein $X^3$ is a hydrogen atom or a methyl group; $R^3$ and $R^4$ may be the same as or different from each other, and are each a hydrogen atom or an alkyl group that may optionally have a substituent). Specific examples of $R^3$ and $R^4$ in the formula (2) include those mentioned for $R^1$ and $R^2$ in the formula (1).

Examples of the (meth)acrylamide include (meth)acrylamide and derivatives thereof. Specific examples thereof include (meth)acrylamide, N-methyl (meth)acrylamide, N-isopropyl (meth)acrylamide, N-tert-butyl (meth)acrylamide, N-phenyl (meth)acrylamide, N-methoxymethyl (meth)acrylamide, N-butoxymethyl (meth)acrylamide, 4-acryloylmorpholine, diacetone (meth)acrylamide, N,N-dimethyl (meth)acrylamide, N,N-diethyl (meth)acrylamide, and 2-(meth)acrylamido-2-methylpropane sulfonic acid. Particularly preferred among these is N-tert-butyl acrylamide.

In the compound having an amide bond, the amide bond is a bond represented by -CO-NR"-, and may be a

bond represented by -CO-NR"-CO-. R" is a hydrogen atom, an alkyl group that may optionally have a substituent, or a phenyl group that may optionally have a substituent. Examples of the alkyl group and examples of the substituent respectively include the same alkyl groups and the substituents mentioned for R in the compound having an amide group. Examples of the compound having an amide bond include N-vinyl acetamide and N-vinyl acetamide derivatives such as N-methyl-N-vinyl acetamide; and maleimide and maleimide derivatives such as N-butyl maleimide, and N-phenyl maleimide. Preferred among these is N-vinyl acetamide.

Examples of the monomer copolymerizable with VdF and TFE further include $CH_2=CH-CH_2-Y$, $CH_2=C(CH_3)-CH_2-Y$, $CH_2=CH-CH_2-O-CO-CH(CH_2COOR^d)-Y$, $CH_2=CH-CH_2-O-CH_2-CH(OH)-CH_2-Y$, $CH_2=C(CH_3)-CO-O-CH_2-CH_2-CH_2-Y$, $CH_2=CH-CO-O-CH_2-CH_2-Y$, and $CH_2=CHCO-NH-C(CH_3)_2-CH_2-Y$ (where Y is a hydrophilic polar group and $R^d$ is an alkyl group). In addition, the copolymerizable monomer may be any of allyl ether hydroxide monomers such as $CH_2=CH-CH_2-O-(CH_2)_n-OH$ ($3 \leq n \leq 8$),

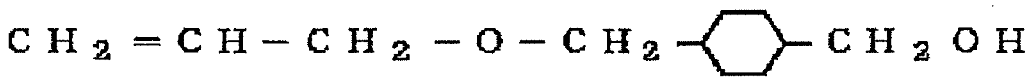

,

$CH_2=CH-CH_2-O-(CH_2-CH_2-O)_n-H$ ($1 \leq n \leq 14$), and $CH_2=CH-CH_2-O-(CH_2-CH(CH_3)-O)_n-H$ ($1 \leq n \leq 14$), allyl ether or ester monomers substituted with a carboxyl group and/or $(CF_2)_n-CF_3$ ($3 \leq n \leq 8$), including $CH_2=CH-CH_2-O-CO-C_2H_4-COOH$, $CH_2=CH-CH_2-O-CO-C_5H_{10}-COOH$, $CH_2=CH-CH_2-O-C_2H_4-(CF_2)_nCF_3$, $CH_2=CH-CH_2-CO-O-C_2H_4-(CF_2)_nCF_3$, and $CH_2=C(CH_3)-CO-O-CH_2-CF_3$.

The studies performed so far lead to an inference that the adhesiveness can be improved by slightly decreasing the crystallinity of the copolymer of vinylidene fluoride and tetrafluoroethylene to give flexibility to the material even without any of the aforementioned compounds having a polar group. This enables the use of unsaturated hydrocarbon monomers ($CH_2=CHR$, where R is a hydrogen atom, an alkyl group, or a halogen such as Cl) (e.g., ethylene, propylene) and fluoromonomers such as chlorotrifluoroethylene, hexafluoropropylene (HFP), hexafluoroisobutene, 2,3,3,3-tetrafluoropropene, $CF_2=CF-O-C_nF_{2n+1}$ (where n is an integer of 1 or greater), $CH_2=CF-C_nF_{2n+1}$ (where n is an integer of 1 or greater), $CH_2=CF-(CF_2CF_2)_nH$ (where n is an integer of 1 or greater), and $CF_2=CF-O-(CF_2CF(CF_3)O)_m-C_nF_{2n+1}$ (where m and n are each an integer of 1 or greater).

Further, ethylenic fluoromonomers having at least one functional group, represented by the following formula:

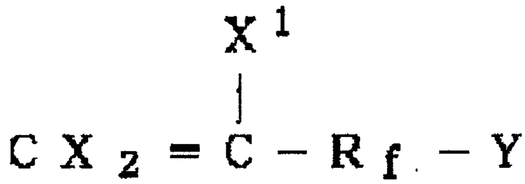

(wherein Y is $-CH_2OH$, -COOH, a carboxylic acid salt, a carboxy ester group, or an epoxy group; X and $X^1$ may be the same as or different from each other, and are each a hydrogen atom or a fluorine atom; and $R_f$ is a C1-C40 divalent fluoroalkylene group or a C1-C40 divalent fluoroalkylene group having an ether bond) may also be used. Copolymerization of one or two or more of these monomers leads to further improved adhesiveness, achieving good charge and discharge cycle performance even after repeated charge and discharge.

For good flexibility and chemical resistance, more preferred among these monomers are hexafluoropropylene (HFP) and 2,3,3,3-tetrafluoropropene.

If the fluoropolymer is a VdF/TFE/HFP terpolymer, preferably, the mole ratio (VdF + TFE) units/HFP unit is 90/10 to 99/1 and the mole ratio VdF /TFE unit is 40/60 to 95/5.

More than 10 mol% of the HFP unit may cause excessively high swellability with an electrolyte solution. The amount of the HFP unit is preferably 5 mol% or less, more preferably 4 mol% or less. The lower limit of the amount of the HFP unit is preferably 1 mol%.

As mentioned above, the fluoropolymer include a polymerized unit other than the VdF unit and the TFE unit. Still, the fluoropolymer more preferably consists of the VdF unit and the TFE unit.

The fluoropolymer has a weight average molecular weight (polystyrene equivalent) of 200,000 to 2,000,000. The weight average molecular weight within the above range leads to improved adhesiveness of the composite porous membrane to the porous substrate.

The weight average molecular weight is preferably 300,000 or more and 1,900,000 or less, more preferably 1,700,000 or less, still more preferably 1,500,000 or less.

The weight average molecular weight is a value determined by gel permeation chromatography (GPC) at 50°C

using N,N-dimethyl formamide as a solvent.

The fluoropolymer preferably has a melting point of 100°C to 240°C. The melting point is more preferably 110°C or higher, still more preferably 120°C or higher.

The melting point can be determined as a temperature corresponding to the maximum value on a heat-of-fusion curve obtained using a differential scanning calorimetry (DSC) device at a temperature-increasing rate of 10°C/min.

The fluoropolymer may be produced by any known method such as a method of mixing the VdF and TFE monomers, which are polymerized units, and appropriate additives such as a polymerization initiator, and then suspension-polymerizing, emulsion-polymerizing, or solution-polymerizing the monomers. For easiness of post-treatment, for example, aqueous suspension polymerization and emulsion polymerization are preferred.

If the fluoropolymer is produced by emulsion polymerization, an aqueous dispersion containing particles of the fluoropolymer and water is obtained. In order to improve the dispersion stability of this aqueous dispersion, a surfactant may be further added thereto. Thereby, the particles neither coagulate to form coarse particles having a particle size of 1 $\mu$m or greater nor precipitate even if the aqueous dispersion is stored for a long time (for example, longer than one week, one month, six months, or one year) or excessive vibration is applied to the aqueous dispersion in transportation; in other words, an aqueous dispersion excellent in storage stability and stable to vibrations in transportation is obtained. Further, the surfactant can reduce the surface tension of the aqueous dispersion. For example, the surface tension may be 30 mN/m or lower. As will be mentioned later, a dispersion (slurry-like coating liquid) for forming the composite porous membrane can be prepared by adding inorganic particles to the aqueous dispersion. If the surface tension of the aqueous dispersion is reduced, not only the fluoropolymer particles but also the inorganic particles are well dispersed in the resulting dispersion. A dispersion having excellent dispersibility has high permeability to the porous substrate, and thus achieves excellent uniformity of the resulting composite porous membrane.

Examples of the surfactant to be added to the aqueous dispersion include nonionic surfactants, anionic surfactants, cationic surfactants, amphoteric surfactants, polymeric surfactants and any combinations thereof. The nonionic surfactants are preferably non-fluorinated nonionic surfactants, and examples thereof include polyoxyethylene alkyl ethers, polyoxyethylene alkyl esters, polyoxyethylene alkyl phenyl ethers, sorbitan alkylates, polyoxyethylene sorbitan monoalkylates, ethylene oxide/propylene oxide copolymers, polyoxyethylene aryl ethers, and polyoxyethylene alkyl amine ethers. The anionic surfactants are preferably non-fluorinated anionic surfactants, and examples thereof include sodium salts of sulfuric acid esters of fatty alcohols, alkyl benzene sulfonates, alkane sulfonates, alkyl sulfates, alkyl phosphonates, alkyl phosphates, polyoxyethylene alkyl ether sulfates, polyoxyethylene alkyl ester sulfates, polyoxyethylene alkyl phenyl ether sulfates, monoalkyl succinate sulfonates, and dialkyl succinate sulfonates. The cationic surfactants are preferably non-fluorinated cationic surfactants, and examples thereof include alkylpyridinium chlorides, alkylammonium chlorides, alkyl imidazolines, and alkyl ammonium hydrides. The amphoteric surfactants are preferably non-fluorinated amphoteric surfactants, and examples thereof include alkylimidazolium betaines and alkyl amide betaines. Examples of the polymeric surfactants include polyacrylic acid salts, ammonium polyacrylate, polymethacrylic acid salts, ammonium polymethacrylate, and naphthalene sulfonate formalin condensates.

For a higher effect of dispersing the fluoropolymer particles and the inorganic particles, preferred among these surfactants are nonionic surfactants, and more preferred are non-fluorinated nonionic surfactants. In order not to cause problems such as air pollution and bad odors due to pyrolytic conversion of the surfactant into harmful organic aromatic compounds (e.g., benzene, toluene, xylene), the surfactant is more preferably a polyoxyethylene alkyl ether represented by the following formula:

$$RO(CH_2CH_2O)_nH$$

(wherein R is a C8-C18 saturated or unsaturated hydrocarbon group; and n is an integer of 5 to 18) and having an oxyethylene content of 60 to 75 mass% in the molecule. Based on the usual meaning of the term, the hydrocarbon group is naturally free from a fluorine atom.

In order to achieve a high effect of dispersing the fluoropolymer particles and the inorganic particles, the surfactant is more preferably at least one selected from the group consisting of non-fluorinated nonionic surfactants and non-fluorinated anionic surfactants among the above surfactants, more preferably a non-fluorinated nonionic surfactant, and still more preferably a combination of a non-fluorinated nonionic surfactant and a non-fluorinated anionic surfactant.

The aqueous dispersion before blending of inorganic particles preferably contains 0.1 to 5 mass%, more preferably 0.3 to 4 mass%, still more preferably 0.5 to 3 mass% of the surfactant. If the surfactant concentration exceeds 5 mass%, the oxidation resistance of the separator may be low, which may affect the electric properties thereof. If the surfactant concentration is less than 0.1 mass%, the storage stability of the aqueous dispersion may not be sufficiently improved, or coagulation of the particles to form coarse particles or precipitation of the particles may occur during long-term storage or transportation.

In order to improve the productivity (coating efficiency) in the coating process, the aqueous dispersion before blending of inorganic particles preferably has a fluoropolymer concentration (solids content) of 10 mass% or more, more

preferably 20 mass% or more. For good storage stability, the fluoropolymer concentration is preferably 60 mass% or less, more preferably 50 mass% or less.

The amount of the fluoropolymer is 50 mass% or less in the composite porous membrane.

More than 50 mass% of the fluoropolymer causes too low a porosity in the composite porous membrane, so that the separator fails to exert the ion-permeating function. In order not to cause insufficient bonding between the inorganic particles and not to markedly deteriorate the mechanical physical properties of the composite porous membrane, the amount of the fluoropolymer is preferably 1 mass% or more in the composite porous membrane.

The amount of the fluoropolymer in the composite porous membrane is preferably 45 mass% or less, more preferably 40 mass% or less, whereas the amount thereof is more preferably 2 mass% or more, still more preferably 3 mass% or more, particularly preferably 4 mass% or more.

The composite porous membrane includes at least one type of inorganic particles selected from the group consisting of metal oxide particles and metal hydroxide particles. The amount of the inorganic particles is preferably 50 to 99 mass% in the composite porous membrane. The inorganic particles in an amount within the above range enable production of a separator that includes a composite porous membrane stacked therein having a pore size and porosity which do not prevent permeation of lithium ions. Further, a separator which is high in heat resistance and less likely to be heat-shrunk is achieved.

The amount of the inorganic particles in the composite porous membrane is more preferably 55 mass% or more, still more preferably 60 mass% or more, whereas the amount thereof is more preferably 98 mass% or less, still more preferably 97 mass% or less, particularly preferably 96 mass% or less.

The inorganic particles preferably have an average particle size of 20 μm or smaller, more preferably 10 μm or smaller, still more preferably 5 μm or smaller. The lower limit of the average particle size is preferably 0.001 μm.

The average particle size is a value determined using a transmission electron microscope, a laser particle size distribution analyzer, or the like.

In order to improve the ion conductivity and the shutdown effect of the separator, the metal oxide particles are preferably particles of an oxide of a metal other than alkali metals and alkaline earth metals, and more preferably particles of at least one selected from the group consisting of aluminum oxide, silicon oxide, titanium oxide, vanadium oxide, and copper oxide.

The metal oxide particles preferably have an average particle size of 20 μm or smaller, more preferably 10 μm or smaller, still more preferably 5 μm or smaller. The lower limit of the average particle size is preferably 0.001 μm.

The average particle size is a value determined using a transmission electron microscope.

For excellent ion conductivity, the metal oxide particles are particularly preferably aluminum oxide particles or silicon oxide particles having an average particle size of 5 μm or smaller.

The amount of the metal oxide particles is preferably 50 to 99 mass% in the composite porous membrane. The metal oxide particles in an amount within the above range enable production of a separator that includes a composite porous membrane stacked therein having a pore size and porosity which do not prevent permeation of lithium ions. Further, the separator which is high in heat resistance and less likely to be heat-shrunk is achieved.

The amount of the metal oxide particles in the composite porous membrane is more preferably 55 mass% or more, still more preferably 60 mass% or more, whereas the amount thereof is more preferably 98 mass% or less, still more preferably 97 mass% or less, particularly preferably 96 mass% or less.

In order to improve the ion conductivity and the shutdown effect of the separator, the metal hydroxide particles are preferably particles of a hydroxide of an alkali metal or an alkaline earth metal, and more preferably particles of at least one selected from the group consisting of magnesium hydroxide, calcium hydroxide, aluminum hydroxide, chromium hydroxide, zirconium hydroxide, and nickel hydroxide.

The metal hydroxide particles preferably have an average particle size of 20 μm or smaller, more preferably 10 μm or smaller, still more preferably 5 μm or smaller. The lower limit of the average particle size is preferably 0.001 μm.

The average particle size is a value determined using a transmission electron microscope.

The amount of the metal hydroxide particles is preferably 50 to 99 mass% in the composite porous membrane. The metal hydroxide particles in an amount within the above range enable production of a separator that includes a composite porous membrane stacked therein having a pore size and porosity which do not prevent permeation of lithium ions. Further, the separator which is high in heat resistance and less likely to be heat-shrunk is achieved.

The amount of the metal hydroxide particles in the composite porous membrane is more preferably 55 mass% or more, still more preferably 60 mass% or more, whereas the amount thereof is more preferably 98 mass% or less, still more preferably 97 mass% or less.

The composite porous membrane preferably further contains organic particles. The organic particles are preferably particles of a non-conductive crosslinked polymer, more preferably particles of crosslinked polystyrene, crosslinked polymethacrylate, or crosslinked acrylate.

The organic particles preferably have an average particle size of 20 μm or smaller, more preferably 10 μm or smaller, still more preferably 5 μm or smaller. The lower limit of the average particle size is preferably 0.001 μm.

The average particle size is a value determined using a transmission electron microscope.

The amount of the organic particles is preferably 0 to 49 mass% in the composite porous membrane. The organic particles in an amount within the above range enable production of a separator that includes a composite porous membrane stacked therein having a pore size and porosity which do not prevent permeation of lithium ions.

The amount of the organic particles in the composite porous membrane is more preferably 2 mass% or more, still more preferably 5 mass% or more, whereas the amount thereof is more preferably 37 mass% or less, still more preferably 35 mass% or less.

The composite porous membrane may further contain any other components in addition to the aforementioned fluoropolymer and inorganic particles. Examples of such other components include other resins and rubbers.

The resin to be favorably used in combination may be one or two or more of polyacrylate, polymethacrylate, polyacrylonitrile, polyamide-imide, polyvinylidene fluoride (PVdF), and VdF/HEP copolymer resin, for example.

The rubber to be favorably used in combination may be one or two or more of VdF/HFP copolymer rubber, VdF/TFE/HFP copolymer rubber, and acrylic rubber, for example. These rubbers may be or may not be crosslinked.

Particularly preferred resin or rubber to be used in combination is acrylic rubber for improved ion conductivity, and is VdF/HFP copolymer rubber, VdF/TFE/HFP copolymer rubber, or VdF/HFP resin for improved ion conductivity and improved oxidation resistance.

The VdF/HFP copolymer rubber preferably has a mole ratio VdF unit/HFP unit of 80/20 to 65/35.

The VdF/TFE/HFP copolymer rubber preferably has a mole ratio VdF unit/HFP unit/TFE unit of 80/5/15 to 60/30/10.

The VdF/HFP resin preferably has a mole ratio VdF unit/HFP unit of 98/2 to 85/15.

The VdF/HFP resin preferably has a melting point of 100°C to 200°C.

The amount of such other resin or rubber is preferably 400 parts by mass or less, more preferably 200 parts by mass or less, still more preferably 150 parts by mass or less, for 100 parts by mass of the fluoropolymer. The lower limit thereof depends on the target effect, and is about 10 parts by mass.

The composite porous membrane is preferably disposed on or above the porous substrate, and more preferably disposed directly on the porous substrate.

The composite porous membrane may be disposed only on or above one side of the porous substrate, or may be disposed on or above both sides thereof. The composite porous membrane may be disposed so as to cover the entire porous substrate on or above which the composite porous membrane is disposed or may be disposed so as to cover only a part of the porous substrate.

If the composite porous membrane is disposed only on or above one side of the porous substrate, the weight of the composite porous membrane is preferably within the range of 0.5 to 50.0 g/$m^2$. Less than 0.5 g/$m^2$ of the composite porous membrane may lead to insufficient adhesiveness to electrodes. More than 50.0 g/$m^2$ of the composite porous membrane tends to prevent the ionic conduction and to deteriorate the load characteristics, and thus is not preferred. If the composite porous membrane is disposed on or above both surfaces of the porous substrate, the weight of the fluoropolymer is preferably 0.1 to 6.0 g/$m^2$.

The porous substrate herein means a substrate having pores or voids therein. Examples of such a substrate include microporous membranes, porous sheets formed from fibrous materials such as nonwoven fabrics and paper-like sheets, and composite porous membranes prepared by stacking one or more porous layers on such a microporous membrane or porous sheet. The microporous membrane herein means a membrane having many micropores therein communicating with each other so that gas or liquid is allowed to pass therethrough from one side to the other side.

The material constituting the porous substrate may be either an organic material having electric insulation or an inorganic material. In order to give the shutdown function to the substrate, the material constituting the substrate is preferably a thermoplastic resin. The shutdown function herein means a function of, when the battery temperature increases, preventing thermal runaway of the battery by melting the thermoplastic resin to block the pores of the porous substrate, thereby cutting off the transfer of ions. An appropriate thermoplastic resin is a thermoplastic resin having a melting point lower than 200°C, and particularly preferably polyolefin.

The porous substrate formed from polyolefin is preferably a polyolefin microporous membrane. The polyolefin microporous membrane may be a polyolefin microporous membrane that has sufficient mechanical properties and ion permeability and is applied to conventional separators for non-aqueous secondary batteries. In order to achieve the above shutdown function, the polyolefin microporous membrane preferably contains polyethylene.

The weight average molecular weight of the polyolefin is preferably 100,000 to 5,000,000. The polyolefin having a weight average molecular weight of lower than 100,000 may have difficulty in securing sufficient mechanical properties. The polyolefin having a weight average molecular weight exceeding 5,000,000 may deteriorate the shutdown function or may be difficult to mold.

Such a polyolefin microporous membrane can be produced by the following method, for example. Specifically, the microporous membrane can be produced by a method including the successive steps of: (i) extruding a molten polyolefin resin through a T-die to prepare a sheet; (ii) crystallizing the sheet; (iii) stretching the sheet; and (iv) heat-treating the sheet. Alternatively, the microporous membrane can be produced by a method including the successive steps of: (i) melting a polyolefin resin together with a plasticizer (e.g., liquid paraffin), extruding the molten matter through a T-die, and cooling the extruded matter to form a sheet; (ii) stretching the sheet; (iii) extracting the plasticizer from the sheet; and (iv) heat-treating the sheet.

Examples of the porous sheets formed from fibrous material include porous sheets formed from any of fibrous materials of polyesters such as polyethylene terephthalate, polyolefins such as polyethylene and polypropylene, heat-resistant polymers such as aromatic polyamide, polyimide, polyethersulfone, polysulfone, polyether ketone, and polyether imide, and any mixtures of these fibrous materials.

The porous substrate may be a composite porous substrate on which a functional layer is further stacked thereon.

The composite porous substrate is preferred in that the functional layer can give an additional function. In order to give heat resistance, for example, the functional layer may be a porous layer formed from heat-resistant resin or a porous layer formed from a heat-resistant resin and inorganic filler. The heat-resistant resin may be one or two or more of heat-resistant polymers selected from aromatic polyamide, polyimide, polyethersulfone, polysulfone, polyether ketone, and polyether imide. Examples of the inorganic filler to be suitably used include metal oxides such as alumina and metal hydroxides such as magnesium hydroxide. Such a composite may be formed by applying a functional layer to the porous sheet, bonding the components with adhesive, or diffusion bonding the components, for example.

The porous substrate in the present invention is preferably formed from at least one resin selected from the group consisting of polyethylene, polypropylene, polyimide, polyamide, polyethylene terephthalate, polyester, and polyacetal, among the above materials.

In order to achieve good mechanical properties and internal resistance, the porous substrate preferably has a thickness within the range of 5 to 50 μm in the present invention.

The separator of the present invention can be produced by stacking the composite porous membrane on the porous substrate. The stacking may be achieved by any method, including conventionally known methods. Specific examples of preferred methods include: a method in which the fluoropolymer, the inorganic particles, and optional other components are dissolved or dispersed in a solvent or water to prepare a solution or dispersion, and the solution or dispersion is roll-coated on the porous substrate; a method of dipping the porous substrate into the solution or dispersion; and a method in which the solution or dispersion is applied to the porous substrate and the workpiece is immersed in an appropriate coagulating liquid. Alternatively, a film of the composite porous membrane may be prepared in advance, and this film and the porous substrate may be stacked by, for example, lamination. One exemplary method of preparing a film of the composite porous membrane is a method in which the fluoropolymer, the inorganic particles, and optional other components are dissolved or dispersed in a solvent to prepare a solution or dispersion, the solution or dispersion is cast on a film having a smooth surface, such as a polyester film or an aluminum film, and then the film is peeled off.

Examples of the solvent include amide solvents such as N-methyl-2-pyrrolidone; ketone solvents such as acetone; and cyclic ether solvents such as tetrahydrofuran. The fluoropolymer and optional other components may be dispersed in water to be used, if necessary.

In the case of an aqueous solution or dispersion, the solution or dispersion containing the fluoropolymer and the inorganic particles may be prepared by blending the inorganic particles and a thickening agent (stabilizer) for viscosity control to the fluoropolymer aqueous dispersion obtained by, for example, emulsion polymerization.

Examples of the thickening agent (stabilizer) include carboxyalkyl celluloses, alkyl celluloses, and hydroxyalkyl celluloses.

The resulting solution or dispersion is preferably applied to the porous substrate and dried to provide a composite porous membrane.

In the case of a solvent-type solution or dispersion, the solution or dispersion containing the fluoropolymer and the inorganic particles may be prepared by coagulating the fluoropolymer aqueous dispersion obtained by, for example, emulsion polymerization, drying the coagulum, and blending the resulting fluoropolymer powder, the inorganic particles, and a solvent.

The resulting solution or dispersion is preferably applied to the porous substrate and dried to provide a composite porous membrane.

One preferred method of forming the composite porous membrane on the porous substrate is a method of applying a dispersion (slurry-like coating liquid) containing the fluoropolymer, the inorganic particles, and water on the porous substrate by a known technique and drying the dispersion. The slurry-like coating liquid may contain any of the aforementioned organic particles, thickening agents, and other components.

The slurry-like coating liquid preferably contains 0.5 to 25 mass%, more preferably 1 mass% or more and 20 mass% or less, of the fluoropolymer. The concentration of the fluoropolymer can be adjusted in accordance with the ratio of blending the fluoropolymer, the inorganic particles, and water.

The slurry-like coating liquid preferably contains 1 to 60 mass%, more preferably 2 mass% or more and 55 mass% or less, of the inorganic particles. The concentration of the inorganic particles can be adjusted in accordance with the ratio of blending the fluoropolymer, the inorganic particles, and water.

If the slurry-like coating liquid contains organic particles, the amount thereof is preferably 1 to 60 mass%, more preferably 2 mass% or more and 55 mass% or less. The concentration of the organic particles can be adjusted in accordance with the ratio of blending the fluoropolymer, the inorganic particles, and water.

If the slurry-like coating liquid contains a thickening agent, the amount thereof is preferably 0.1 to 20 mass%. The concentration of the thickening agent can be adjusted in accordance with the amount of the thickening agent added to the slurry-like coating liquid.

The slurry-like coating liquid can be suitably produced by a method including a step of emulsion polymerizing VdF and TFE in the presence of water to provide a dispersion containing water and a fluoropolymer, and a step of adding inorganic particles to the resulting dispersion. In addition to VdF and TFE, a monomer copolymerizable with VdF and TFE may be further polymerized therewith. The monomer copolymerizable with VdF and TFE is as described above. If necessary, the aforementioned components such as organic particles and thickening agents may be further added thereto. The method also preferably includes a step of concentrating or diluting the dispersion obtained by emulsion polymerization to adjust the concentration of the fluoropolymer.

The dispersion containing the fluoropolymer and water can be particularly suitably produced by a method including a step of emulsion polymerizing VdF and TFE in the presence of water and a surfactant. In this production method, a monomer copolymerizable with VdF and TFE may be further polymerized in addition to VdF and TFE. The monomer copolymerizable with VdF and TFE is as described above.

The surfactant may be any conventionally known surfactant. However, fluorinated surfactants are difficult to decompose and accumulation thereof in the environment is thus feared, so that such surfactants have a great influence on the environment. In contrast, non-fluorinated surfactants serve as chain-transfer agents during the step of producing a fluoropolymer, and thus such surfactants make it difficult to increase the molecular weight of the polymer. The present inventors have performed studies on these problems, and thereby found that use of a reactive fluorinated surfactant enables production of a high molecular weight fluoropolymer without any influence on the environment. If a reactive non-fluorinated surfactant, which is actually a reactive surfactant, is used, a high molecular weight fluoropolymer is not produced. The surfactant to be used is preferably a reactive fluorinated surfactant alone. This is because the reactive fluorinated surfactant has a small influence on the environment, and is copolymerized with VdF and TFE and thereby consumed, so that the resulting dispersion contains substantially no fluorinated surfactant but contains a fluoropolymer and water.

The amount of the reactive fluorinated surfactant is preferably 10 to 1000 ppm, more preferably 50 ppm or more and 500 ppm or less, based on the water.

The reactive fluorinated surfactant is preferably at least one selected from the group consisting of compounds represented by the following formulas (a) to (e), more preferably a compound represented by the formula (e):

$$CF_2=CF-(CF_2)_{n1}-Y^3 \qquad (a)$$

(wherein n1 is an integer of 1 to 10; and $Y^3$ is $-SO_3M^1$ or $-COOM^1$, where $M^1$ is H, $NH_4$, or an alkali metal);

$$CF_2=CF-(CF_2C(CF_3)F)_{n2}-Y^3 \qquad (b)$$

(wherein n2 is an integer of 1 to 5; and $Y^3$ is defined in the same manner as mentioned above);

$$CF_2=CF-O-(CFX^2)_{n3}-Y^3 \qquad (c)$$

(wherein $X^2$ is F or $CF_3$; n3 is an integer of 1 to 10; and $Y^3$ is defined in the same manner as mentioned above);

$$CF_2=CF-O-(CF_2CFX^2O)_{n4}-CF_2CF_2-Y^3 \qquad (d)$$

(wherein n4 is an integer of 1 to 10; and $Y^3$ and $X^2$ are defined in the same manner as mentioned above); and

$$CX^3_2=CFCF_2-O-(CF(CF_3)CF_2O)_{n5}-CF(CF_3)-Y^3 \qquad (e)$$

(wherein $X^3$s are the same as each other, and F or H; n5 is 0 or an integer of 1 to 10; and $Y^3$ is defined in the same manner as mentioned above).

Examples of the alkali metal include Na and K.

In the formula (a), $n^1$ is preferably an integer of 5 or smaller, more preferably an integer of 2 or smaller. In order to achieve appropriate water solubility and surface activity, $Y^3$ is preferably $-COOM^1$. In order to suppress remaining of

the compound as impurities and to improve the heat resistance of the resulting molded article, $M^1$ is preferably H or $NH_4$.

Examples of compounds represented by the formula (a) include those represented by $CF_2$=$CFCF_2COOM^1$, wherein $M^1$ is defined in the same manner as mentioned above.

In the formula (b), $n^2$ is preferably an integer of 3 or smaller for good emulsifying performance. In order to achieve appropriate water solubility and surface activity, $Y^3$ is preferably -$COOM^1$. In order to suppress remaining of the compound as impurities and to improve the heat resistance of the resulting molded article, $M^1$ is preferably H or $NH_4$.

In the formula (c), $n^3$ is preferably an integer of 5 or smaller for good water solubility. In order to achieve appropriate water solubility and surface activity, $Y^3$ is preferably -$COOM^1$. In order to improve the dispersion stability, $M^1$ is preferably H or $NH_4$.

In the formula (d), $X^2$ is preferably -$CF_3$ for good surface activating performance. For good water solubility, $n^4$ is preferably an integer of 5 or smaller. In order to achieve appropriate water solubility and surface activity, $Y^3$ is preferably -$COOM^1$. $M^1$ is preferably H or $NH_4$.

Examples of compounds represented by the formula (d) include those represented by $CF_2$=$CFOCF_2CF(CF_3)OCF_2CF_2COOM^1$, wherein $M^1$ is H, $NH_4$, or an alkali metal.

In the formula (e), $n^5$ is preferably 0 or an integer of 1 to 5, more preferably 0, 1, or 2, still more preferably 0 or 1, for good emulsifying performance. In order to achieve appropriate water solubility and surface activity, $Y^3$ is preferably -$COOM^1$. In order to suppress remaining of the compound as impurities and to improve the heat resistance of the resulting molded article, $M^1$ is preferably H or $NH_4$.

Examples of compounds represented by the formula (e) include those represented by $CH_2$=$CFCF_2OCF(CF_3)CF_2OCF(CF_3)COOM^1$, wherein $M^1$ is defined in the same manner as mentioned above.

Further, the emulsion polymerization is preferably performed in the presence of paraffin. The presence of paraffin suppresses adhesion of the generated fluoropolymer to a polymerization tank and a stirring blade used in the emulsion polymerization. Thereby, a high molecular weight fluoropolymer is obtained.

For good dispersion stability, the production method preferably further includes a step of adding at least one non-fluorinated surfactant selected from the group consisting of non-fluorinated nonionic surfactants, non-fluorinated anionic surfactants, and non-fluorinated cationic surfactants to the dispersion obtained by the emulsion polymerization. This step may be performed before or after the step of adding the inorganic particles, and is preferably performed before the step of adding the inorganic particles. The non-fluorinated surfactant is preferably added in an amount of 0.1 to 5 mass% based on the dispersion. The amount thereof is more preferably 0.2 to 4.5 mass%, still more preferably 0.3 to 4 mass%. Preferred examples of the non-fluorinated surfactant include those described above.

The above production method can provide a dispersion containing particles of a fluoropolymer having a VdF unit and a TFE unit. Further, the production method can also provide a dispersion containing substantially no fluorinated surfactant. The dispersion obtained by the above production method usually contains 10 to 60 mass% of the fluoropolymer.

The dispersion which is obtained by emulsion polymerization in the presence of a reactive fluorinated surfactant, which contains water and particles of a fluoropolymer including a VdF unit and a TFE unit, in which the fluoropolymer has a weight average molecular weight of 200,000 or more, and which contains substantially no fluorinated surfactant is a novel dispersion. The dispersion can be suitably used as a dispersion for producing separators for secondary batteries.

One characteristic of the dispersion is to contain particles of a high molecular weight fluoropolymer. The weight average molecular weight of the fluoropolymer is preferably 200,000 or more, more preferably 300,000 or more, whereas it is preferably 2,000,000 or less, more preferably 1,900,000 or less.

The fluoropolymer contained in the dispersion may include any amount of the VdF unit. Still, the amount of the VdF unit is preferably 40 mol% or more in all the polymerized units, whereas the amount thereof is preferably 95 mol% or less, more preferably 93 mol% or less, in all the polymerized units.

The fluoropolymer contained in the dispersion may include any amount of the TFE unit. Still, the amount of the TFE unit is preferably 5 to 60 mol% in all the polymerized units. The amount of the TFE unit is more preferably 7 mol% or more and 50 mol% or less in all the polymerized units.

The amount of the fluoropolymer in the dispersion is preferably 10 to 60 mass%, more preferably 15 mass% or more and 50 mass% or less. The concentration of the fluoropolymer can be determined by a dry weight method (a method in which the dispersion obtained by emulsion polymerization is heated so that the solvent is evaporated and the residue is dried and solidified, and then the solid weight is weighed).

In the dispersion containing the fluoropolymer and water, the concentration of the fluorinated surfactant is preferably 4000 ppm or less, more preferably 1000 ppm or less, still more preferably 100 ppm or less, much more preferably 10 ppm or less, still much more preferably 1000 ppb or less, particularly preferably 500 ppb or less, based on the dispersion containing the fluoropolymer and water. Most preferably, the dispersion contains substantially no fluorinated surfactant.

The concentration of the fluorinated surfactant can be determined by ultra-high performance liquid chromatography (UPLC) on the liquid phase prepared by coagulating and centrifuging the dispersion under the conditions mentioned

below. For the calculation of the amount of the fluorinated surfactant, a calibration curve is prepared by UPLC measurement on an aqueous solution of a fluorinated surfactant in which the amount of the surfactant is known under the following conditions. The detection limit is 10 ppb based on the dispersion.

(Measurement conditions)

Device: Acquity™ UltraPerformance LC (Waters Corp.)
Column: BEHC 181.7 μm (2.1 × 50 mm)
Mobile phase: acetonitrile/20 mM ammonium acetate aqueous solution = 1/1 (vol/vol%)
Sample amount: 5 μL
Flow rate: 0.4 ml/min
Measurement mass number: 421 > 163
Column temperature: 40°C

The fluorinated surfactant may be any surfactant having a fluorine atom, and may be any of nonionic surfactants, anionic surfactants, cationic surfactants, and amphoteric surfactants, as well as reactive fluorinated surfactants. In other words, the dispersion is also substantially free from the reactive fluorinated surfactant used in the emulsion polymerization.

Many of the fluorinated surfactants have a number average molecular weight of 1000 or less. There are also many fluorinated surfactants having a number average molecular weight of 500 or less. The carbon number thereof is usually 5 to 12. The number average molecular weight herein is a polystyrene equivalent value measured by gel permeation chromatography (GPC). High molecular weight fluorinated surfactants have a small influence on the environment, and thus the dispersion is allowed to contain high molecular weight one among the fluorinated surfactants. Nevertheless, the dispersion is preferably free from the fluorinated surfactant regardless of the molecular weight thereof. Examples of the fluorinated anionic surfactant include perfluorocarboxylic acids.

In order to achieve good workability in slurry production, to uniformly disperse the fluorine polymer in the composite porous membrane so that the heat resistance is sufficiently exerted, and to make the thickness of the composite porous membrane uniform and as thin as of the order of several micrometers, the fluoropolymer particles preferably have an average primary particle size of 50 nm or greater, more preferably 75 nm or greater, whereas the average primary particle size thereof is preferably 500 nm or smaller, more preferably 300 nm or smaller. The average primary particle size can be determined using a dynamic light scattering spectrometer, a laser diffraction scattering particle size distribution analyzer, or the like.

For good dispersion stability, the dispersion preferably further contains at least one non-fluorinated surfactant selected from the group consisting of non-fluorinated nonionic surfactants, non-fluorinated anionic surfactants, and non-fluorinated cationic surfactants. The dispersion contains the non-fluorinated surfactant in an amount of preferably 0.1 to 5 mass%, more preferably 0.2 to 4.5 mass%, still more preferably 0.3 to 4 mass%. Preferred examples of the non-fluorinated surfactant include those described above.

The dispersion preferably has a surface tension of 50 mN/m or lower, more preferably 45 mN/m or lower, still more preferably 40 mN/m or lower. The lower limit thereof may be any value, and may be 15 mN/m. The surface tension can be determined by the Wilhelmy method using a platinum plate.

A dispersion (slurry-like coating liquid) for forming the composite porous membrane can be produced by optionally adjusting the concentration of the dispersion obtained by the above production method or the novel dispersion to a desired value, and adding at least one type of inorganic particles selected from the group consisting of metal oxide particles and metal hydroxide particles to the dispersion. If necessary, any of the aforementioned components such as organic particles and thickening agents may be added thereto.

The separator for secondary batteries of the present invention can constitute a secondary battery together with a positive electrode, a negative electrode, and a non-aqueous electrolyte solution.

A secondary battery provided with the separator for secondary batteries of the present invention stably works in a high-temperature environment and is high in durability. Further, such a secondary battery is excellent in high-rate performance, and the resistance thereof is less likely to increase even if charge and discharge are repeated at a high voltage.

The present invention also relates to a secondary battery including the separator, a positive electrode, a negative electrode, and a non-aqueous electrolyte solution.

The secondary battery of the present invention stably works in a high-temperature environment and is high in durability. The secondary battery is also excellent in high-rate performance and the resistance thereof is less likely to increase even if charge and discharge are repeated at a high voltage.

The positive electrode, the negative electrode, and the non-aqueous electrolyte solution may be any known ones usable for secondary batteries.

The secondary battery is particularly preferably a lithium secondary battery. The following will give representative configurations in the cases where the secondary battery of the present invention is a lithium secondary battery. Still, the

secondary battery of the present invention is not limited to the following configurations.

The positive electrode includes a positive electrode mixture containing a positive electrode active material, which is a material of the positive electrode, and a current collector.

The positive electrode active material may be any material that can electrochemically absorb and release lithium ions. The material preferably contains lithium and at least one transition metal, and examples thereof include lithium transition metal complex oxides such as lithium/cobalt complex oxides, lithium/nickel complex oxides, and lithium/manganese complex oxides, and lithium-containing transition metal phosphate compounds.

The positive electrode mixture preferably further contains a binding agent, a thickening agent, and a conductive material.

The binding agent may be any material that is safe against solvents and electrolyte solutions used in production of electrodes. Examples thereof include polyvinylidene fluoride, polytetrafluoroethylene, vinylidene fluoride-tetrafluoroethylene copolymers, vinylidene fluoride-hexafluoropropylene copolymers, vinylidene fluoride-tetrafluoroethylene-hexafluoropropylene copolymers, polyethylene, polypropylene, styrene-butadiene rubber, isoprene rubber, polybutadiene rubber, ethylene-acrylic acid copolymers, and ethylene-methacrylic acid copolymers.

Examples of the thickening agent include carboxymethyl cellulose, methyl cellulose, hydroxymethyl cellulose, ethyl cellulose, polyvinyl alcohol, oxidized starch, phosphorylated starch, and casein.

Examples of the conductive material for the positive electrode include carbon materials such as graphite and carbon black.

The current collector for the positive electrode may be formed from a metal such as aluminum, titanium, or tantalum, or an alloy thereof. Preferred is aluminum or an alloy thereof.

The positive electrode may be produced by a usual method. One example of the production method is a method including: mixing the positive electrode active material with the aforementioned components, such as a binding agent, a thickening agent, and a conductive material, and other components such as a solvent to form a slurry-like positive electrode mixture; applying the mixture to a current collector; drying the mixture; and pressing and densifying the workpiece.

The negative electrode includes a negative electrode mixture containing a negative electrode material and a current collector.

Examples of the negative electrode material include carbonaceous materials that can absorb and release lithium, such as pyrolysates of organic matter under various pyrolysis conditions, artificial graphite, and natural graphite; metal oxide materials that can absorb and release lithium, such as tin oxide and silicon oxide; lithium metals; and various lithium alloys. These negative electrode materials may be used in admixture of two or more.

Preferred among the carbonaceous materials that can absorb and release lithium are artificial graphite produced by high-temperature treatment on easily graphitizable pitch formed from any of various materials, purified natural graphite, and those obtained by surface-treating such graphites with pitch or other organic matter and carbonizing the workpiece.

The negative electrode mixture preferably further contains a binding agent, a thickening agent, and a conductive material.

Examples of the binding agent include the same as the aforementioned binding agents to be used for the positive electrode.

Examples of the thickening agent include the same as the aforementioned thickening agents to be used for the positive electrode.

Examples of the conductive material of the negative electrode include metal materials such as copper and nickel; and carbon materials such as graphite and carbon black.

The current collector for the negative electrode may be formed from copper, nickel, stainless steel, or the like. Preferred is copper in terms of easy processability into a thin film and of cost.

The negative electrode may be produced by a usual method. One example of the production method is a method including: mixing the negative electrode material with the aforementioned components, such as a binding agent, a thickening agent, and a conductive material, and other components such as a solvent to form a slurry-like mixture; applying the mixture to a current collector; drying the mixture; and pressing and densifying the workpiece.

The non-aqueous electrolyte solution may be one prepared by dissolving a known electrolyte salt in a known organic solvent for electrolyte salt dissolution.

The organic solvent for electrolyte salt dissolution may be any solvent, and may be one or two or more of hydrocarbon solvents such as propylene carbonate, ethylene carbonate, butylene carbonate, γ-butyrolactone, 1,2-dimethoxyethane, 1,2-diethoxyethane, dimethyl carbonate, diethyl carbonate, and ethyl methyl carbonate; and fluorosolvents such as fluoroethylene carbonate, fluoroethers, and fluorinated carbonates.

Examples of the electrolyte salt include $LiClO_4$, $LiAsF_6$, $LiBF_4$, $LiPF_6$, LiCl, LiBr, $CH_3SO_3Li$, $CF_3SO_3Li$, $LiN(SO_2CF_3)_2$, $LiN(SO_2C_2F_5)_2$, and cesium carbonate. For good cycle performance, $LiPF_6$, $LiBF_4$, $LiN(SO_2CF_3)_2$, $LiN(SO_2C_2F_5)_2$, or any combination thereof is particularly preferred.

The concentration of the electrolyte salt is preferably 0.8 mol/L or more, more preferably 1.0 mol/L or more.

The upper limit thereof is in accordance with the organic solvent for electrolyte salt dissolution, and is usually 1.5 mol/L.

The lithium secondary battery may have any shape, and examples thereof include a cylindrical shape, a square shape, a laminate shape, a coin shape, and a large-scale shape. The shapes and the structures of the positive electrode, the negative electrode, and the separator may be varied in accordance with the shape of the battery to the extent that the effects of the present invention are not impaired.

EXAMPLES

Next, the present invention will be described referring to, but not limited to, examples. The physical properties of the fluoropolymers in the examples were determined by the following methods.

<Number average molecular weight and Weight average molecular weight>

The average molecular weights were determined by gel permeation chromatography (GPC). With HLC-8320GPC (Tosoh Corp.), three columns (SuperAWM-H, connected in series), and dimethyl formamide (DMF) serving as a solvent, the values were calculated from the data (reference: polystyrene) measured at 50°C.

<Polymer composition>

The polymer composition in the form of a solution in DMSO was analyzed by $^{19}$F-NMR using an NMR analyzer (VNS400MHz, Agilent Technologies Inc.).

The $^{19}$F-NMR measurement gave the following peak areas (A, B, C, and D), and the ratio between VdF and TFE were calculated.

A: peak area of -86 ppm to -98 ppm
B: peak area of -105 ppm to -118 ppm
C: peak area of -119 ppm to -122 ppm
D: peak area of -122 ppm to -126 ppm

$$\text{Proportion of VdF: } (4A + 2B)/(4A + 3B + 2C + 2D) \times 100 \text{ (mol\%)}$$

$$\text{Proportion of TFE: } (B + 2C + 2D)/(4A + 3B + 2C + 2D) \times 100 \text{ (mol\%)}$$

<Average primary particle size>

The aqueous dispersion (0.05 ml) to be analyzed was diluted with pure water (8 ml) to provide a sample, and the measurement was performed using a dynamic light scattering particle size analyzer Nanotrac UPA (Nikkiso Co., Ltd.). The weight average particle size among the resulting data was defined as the average primary particle size.

<Surface tension>

A platinum plate was immersed in an aqueous dispersion or a dispersion and the measurement was performed under a room temperature condition using a surface tensiometer (CBVP-A3, Kyowa Interface Science Co., Ltd.). The dispersion containing water and the fluoropolymer was coagulated and centrifuged, and the resulting liquid phase was subjected to ultra-high performance liquid chromatography (UPLC) under the following conditions. For the calculation of the amount of the fluorinated surfactant, a calibration curve was prepared by UPLC measurement on an aqueous solution of a fluorinated surfactant in which the amount of the surfactant is known under the following conditions. The detection limit is 10 ppb based on the dispersion.

<Concentration of fluorinated surfactant>

The concentration of the fluorinated surfactant was determined by ultra-high performance liquid chromatography (UPLC) on the liquid phase prepared by coagulating and centrifuging the dispersion containing water and the fluoropolymer under the following conditions. For the calculation of the amount of the fluorinated surfactant, a calibration curve

was prepared by UPLC measurement on an aqueous solution of a fluorinated surfactant in which the amount of the surfactant is known under the following conditions. The detection limit is 10 ppb based on the dispersion.

(Measurement conditions)

Device: Acquity™ UltraPerformance LC (Waters Corp.)
Column: BEHC 181.7 μm (2.1 × 50 mm)
Mobile phase: acetonitrile/20 mM ammonium acetate aqueous solution = 1/1 (vol/vol%)
Sample amount: 5 μL
Flow rate: 0.4 ml/min
Measurement mass number: 421 > 163
Column temperature: 40°C

(Example 1)

<Preparation of composite porous membrane binder polymer (fluoropolymer A)>

A 3-L-capacity SUS polymerization tank equipped with a stirrer was charged with an aqueous solution containing $F(CF_2)_5COONH_4$ at a concentration of 3300 ppm and $CH_2{=}CFCF_{2O}CF(CF_3)CF_2OCF(CF_3)COONH_4$ at a concentration of 200 ppm, and sealed. The inside of the tank was evacuated, purged with nitrogen, and again evacuated, and then isopropyl alcohol serving as a chain-transfer agent in an amount corresponding to 400 cc was put into the tank under vacuum suction using a syringe. Then, a monomer gas mixture of vinylidene fluoride (VdF)/tetrafluoroethylene (TFE) at a ratio of 67/33 mol% was put into the tank until the pressure reached 0.8 MPaG under stirring at 70°C. Thereafter, an aqueous solution containing ammonium persulfate in an amount corresponding to 100 ppm dissolved therein was injected with nitrogen, so that the reaction was started. In order to maintain the pressure inside the tank, a monomer mixture of VdF/TFE at a ratio of 67/33 mol% was additionally put into the tank. When the amount of the additional monomer reached 346 g, the stirring rate was reduced to a slow rate and the gas inside the tank was released, so that the reaction was finished. The inside of the tank was cooled down, and thereby an aqueous dispersion A having a solid polymer equivalent of 20 mass% was obtained.

The fluoropolymer A in the resulting aqueous dispersion A had the following composition and weight average molecular weight.
VdF/TFE = 67.0/33.0 (mol%)
Weight average molecular weight: 1,400,000
The resulting aqueous dispersion A had the following average primary particle size and surface tension.
Average primary particle size: 110 nm
Surface tension: 48 mN/m

<Production of separator>

To the aqueous dispersion A of the fluoropolymer A obtained above were added a high-purity alumina powder (average particle size: 0.013 μm) and carboxymethyl cellulose having a solution viscosity of 1000 to 1400 mPaS (type-B viscometer, 25°C, 1% aqueous solution) so as to give a ratio of alumina/fluoropolymer A/carboxymethyl cellulose = 78/20/2 (mass%), and the components were mixed at 25°C for 12 hours using a ball mill. Thereby, a slurry-like coating liquid (slurry or dispersion for composite porous membrane) containing alumina dispersed in an aqueous solvent was obtained. The resulting slurry-like coating liquid was applied to both surfaces of a polyolefin porous film (polypropylene, thickness: 22 pm), serving as a porous substrate, using a bar coater (amount of liquid applied (amount of porous membrane): 15 g/m$^2$). Then, the workpiece was left to stand in a 90°C oven for two hours, so that the solvent was evaporated. Thereby, a separator was obtained including the fluoropolymer A/alumina composite porous membrane formed on the polyolefin porous film.

<Production of positive electrode>

To lithium cobalt oxide (97 parts) and acetylene black (1.5 parts) was added a solution of polyvinylidene fluoride (KF7200, Kureha Advanced Material, Co., Ltd.) in NMP, serving as a binder for positive electrode, so as to give a solids equivalent of 1.5 parts. The components were mixed using a planetary mixer, and thereby a slurry for positive electrode was obtained. The resulting slurry was applied to one surface of aluminum foil having a thickness of 22 μm, dried with hot air at 120°C for two hours, and pressed using a roll press. Thereby, a positive electrode was obtained having an electrode mixture amount of 25 mg/cm$^2$ and an electrode density of 3.8 g/cc.

<Production of negative electrode>

To artificial graphite (97 parts) was added styrene-butadiene rubber, serving as a binder for negative electrode, so as to give a solids equivalent of 1.5 parts, and the components were mixed using a planetary mixer. Then, to the resulting mixture were added carboxymethyl cellulose (1.5 parts), serving as a thickening agent, and water, serving as a dispersion medium, and the components were·mixed. Thereby, a slurry for negative electrode was obtained. The resulting slurry was applied to one surface of copper foil having a thickness of 18 μm, dried with hot air at 100°C for two hours, and pressed using a roll press. Thereby, a negative electrode was obtained having an electrode mixture amount of 9.5 $mg/cm^2$ and an electrode density of 1.5 g/cc.

<Secondary battery>

The separator (cut out into a size of 7.7 cm × 4.6 cm), positive electrode (cut out into a size of 7.2 cm × 4.1 cm), and negative electrode (cut out into the size of 7.3 cm × 4.2 cm) obtained above were assembled in the order of the positive electrode, the separator, and the negative electrode. A set of these components were laminated with an aluminum film, so that a battery was produced.

Next, the laminated battery was dried in a 70°C vacuum dryer for 12 hours or longer. Then, the battery was charged with an electrolyte solution such that no air was left therein, and sealed. Thereby, a full-cell lithium ion secondary battery was produced. The electrolyte solution used was prepared by dissolving $LiPF_6$ in a solvent mixture of ethylene carbonate (EC) and ethyl methyl carbonate (EMC) (volume ratio EC:EMC = 7:3) so as to have a concentration of 1 mol/L, and adding 1 mass% vinylene carbonate (VC) thereto. The $LiPF_6$, EC, EMC, and VC used here were battery-grade products (Kishida Chemical Co., Ltd.).

(Example 2)

A slurry for composite porous membrane, a separator, and a secondary battery were produced by the same procedure as in Example 1 except that the following fluoropolymer aqueous dispersion B was used instead of the fluoropolymer aqueous dispersion A used in Example 1.

<Preparation of fluoropolymer B>

A 3-L-capacity SUS polymerization tank equipped with a stirrer was charged with an aqueous solution containing $F(CF_2)_5COONH_4$ at a concentration of 3300 ppm and $CH_2=CFCF_2OCF(CF_3)CF_2OCF(CF_3)COONH_4$ at a concentration of 200 ppm, and sealed. The inside of the tank was purged with nitrogen in vacuo and evacuated, and then isopropyl alcohol serving as a chain-transfer agent in an amount corresponding to 600 cc was put into the tank under vacuum suction using a syringe. Then, a monomer gas mixture of VdF/TFE at a ratio of 67/33 mol% was put into the tank until the pressure reached 0.8 MPaG under stirring at 450 rpm at 70°C. Thereafter, an aqueous solution containing ammonium persulfate in an amount corresponding to 100 ppm dissolved therein was injected with nitrogen, so that the reaction was started. In order to maintain the pressure inside the tank, a monomer mixture of VdF/TFE at a ratio of 67/33 mol% was additionally put into the tank. When the amount of the additional monomer reached 346 g, the stirring rate was reduced to a slow rate and the gas inside the tank was released, so that the reaction was finished. The inside of the tank was cooled down, and thereby an aqueous dispersion B having a solid polymer equivalent of 20 mass% was obtained.

The fluoropolymer B in the resulting aqueous dispersion B had the following composition and weight average molecular weight.

VdF/TFE = 67.0/33.0 (mol%)

Weight average molecular weight: 800,000

The resulting aqueous dispersion B had the following average primary particle size and surface tension.

Average primary particle size: 115 nm

Surface tension: 48 mN/m

(Example 3)

A slurry for composite porous membrane, a separator, and a secondary battery were produced by the same procedure as in Example 1 except that the following fluoropolymer aqueous dispersion C was used instead of the fluoropolymer aqueous dispersion A used in Example 1.

<Preparation of fluoropolymer C>

A 3-L-capacity SUS polymerization tank equipped with a stirrer was charged with an aqueous solution containing $F(CF_2)_5COONH_4$ at a concentration of 3300 ppm and $CH_2=CFCF_2OCF(CF_3)CF_2OCF(CF_3)COONH_4$ at a concentration of 200 ppm, and sealed. The inside of the tank was purged with nitrogen in vacuo and evacuated, and then isopropyl alcohol serving as a chain-transfer agent in an amount corresponding to 800 cc was put into the tank under vacuum suction using a syringe. Then, a monomer gas mixture of VdF/TFE at a ratio of 67/33 mol% was put into the tank until the pressure reached 0.8 MPaG under stirring at 450 rpm at 70°C. Thereafter, an aqueous solution containing ammonium persulfate in an amount corresponding to 100 ppm dissolved therein was injected with nitrogen, so that the reaction was started. In order to maintain the pressure inside the tank, a monomer mixture of VdF/TFE at a ratio of 67/33 mol% was additionally put into the tank. When the amount of the additional monomer reached 346 g, the stirring rate was reduced to a slow rate and the gas inside the tank was released, so that the reaction was finished. The inside of the tank was cooled down, and thereby an aqueous dispersion C having a solid polymer equivalent of 20 mass% was obtained.

The fluoropolymer C in the resulting aqueous dispersion C had the following composition and weight average molecular weight.
VdF/TFE = 67.0/33.0 (mol%)
Weight average molecular weight: 350,000
The resulting aqueous dispersion C had the following average primary particle size and surface tension.
Average primary particle size: 110 nm
Surface tension: 48 mN/m

(Example 4)

<Preparation of fluoropolymer D>

A 4-L-capacity autoclave was charged with 1.3 kg of pure water and sufficiently purged with nitrogen. Then, 0.88 kg of octafluorocyclobutane was put thereinto, and the system was maintained at an internal temperature of 37°C and a stirring rate of 555 rpm. Thereafter, a gas mixture of TFE/VdF = 5/95 mol% was charged until the pressure inside the system reached 1.3 MPaG, and then 1.5 g of a 50 mass% solution of di-n-propyl peroxydicarbonate in methanol was added thereto, so that the polymerization was started. Since the pressure inside the system decreased as the polymerization proceeded, a gas mixture of TFE/VdF = 15/85 mol% was continually supplied so that the pressure inside the system was maintained at 1.3 MPaG. The stirring was continued for 44 hours. Then, the pressure was released to atmospheric pressure, and the reaction product was washed with water and dried. Thereby, 600 g of white powder of a fluoropolymer D was obtained.

The resulting fluoropolymer D had the following composition and weight average molecular weight.
VdF/TFE = 85.0/15.0 (mol%)
Weight average molecular weight: 1,200,000

<Production of separator>

To a solution (5 mass%) of the fluoropolymer D obtained above in acetone was added a high-purity alumina powder (average particle size: 0.013 μm) so as to give a ratio of alumina/fluoropolymer D = 80/20 (mass%), and the components were mixed at 25°C for 12 hours using a ball mill. Thereby, a slurry-like coating liquid (slurry for composite porous membrane) containing alumina dispersed in the solvent was obtained. The slurry-like coating liquid obtained as mentioned above was applied to both surfaces of a polyolefin porous film (polypropylene, thickness: 22 μm) using a bar coater. Then, the workpiece was left to stand in a 70°C oven for two hours, so that the solvent was evaporated. Thereby, a separator was obtained including the fluoropolymer D/alumina composite porous membrane formed on the polyolefin porous film.

A secondary battery was produced in the same manner as in Example 1 using the separator obtained above.

(Example 5)

A slurry for composite porous membrane, a separator, and a secondary battery were produced by the same procedure as in Example 4 except that the following fluoropolymer E was used instead of the fluoropolymer D used in Example 4.

<Preparation of fluoropolymer E>

A 4-L-capacity autoclave was charged with 1.3 kg of pure water and sufficiently purged with nitrogen. Then, 0.88 kg of octafluorocyclobutane was put thereinto, and the system was maintained at an internal temperature of 37°C and a stirring rate of 555 rpm. Thereafter, a gas mixture of TFE/VdF = 5/95 mol% was charged until the pressure reached 1.3 MPaG, and then 1.5 g of a 50 mass% solution of di-n-propyl peroxydicarbonate in methanol was added thereto, so that the polymerization was started. Since the pressure inside the system decreased as the polymerization proceeded, a gas mixture of TFE/VdF = 15/85 mol% was continually supplied so that the pressure inside the system was maintained at 1.3 MPaG. The stirring was continued for 10 hours. Then, the pressure was released to atmospheric pressure, and the reaction product was washed with water and dried. Thereby, 132 g of white powder of a fluoropolymer E was obtained.

The resulting fluoropolymer E had the following composition and weight average molecular weight.
VdF/TFE = 85.0/15.0 (mol%)
Weight average molecular weight: 350,000

(Example 6)

A slurry for composite porous membrane, a separator, and a secondary battery were produced by the same procedure as in Example 4 except that the following fluoropolymer F was used instead of the fluoropolymer D used in Example 4.

<Preparation of fluoropolymer F>

A 4-L-capacity autoclave was charged with 1.3 kg of pure water and sufficiently purged with nitrogen. Then, 1.3 g of octafluorocyclobutane was put thereinto, and the system was maintained at an internal temperature of 37°C and a stirring rate of 580 rpm. Thereafter, a gas mixture of TFE/VdF = 2/98 mol% was charged until the pressure reached 1.3 MPaG and 1 g of ethyl acetate was further charged, and then 1 g of a 50 mass% solution of di-n-propyl peroxydicarbonate in methanol was added thereto, so that the polymerization was started. Since the pressure inside the system decreased as the polymerization proceeded, a gas mixture of TFE/VdF = 8/92 mol% was continually supplied so that the pressure inside the system was maintained at 1.3 MPaG. The stirring was continued for 40 hours. Then, the pressure was released to atmospheric pressure, and the reaction product was washed with water and dried. Thereby, 390 g of white powder of a fluoropolymer F was obtained.

The resulting fluoropolymer F had the following composition and weight average molecular weight.
VdF/TFE = 95.0/5.0 (mol%)
Weight average molecular weight: 1,200,000

(Example 7)

A slurry for composite porous membrane, a separator, and a secondary battery were produced by the same procedure as in Example 4 except that the following fluoropolymer G was used instead of the fluoropolymer D used in Example 4.

<Preparation of fluoropolymer G>

A 4-L-capacity autoclave was charged with 1.3 kg of pure water and sufficiently purged with nitrogen. Then, 1.3 g of octafluorocyclobutane was put thereinto, and the system was maintained at an internal temperature of 37°C and a stirring rate of 580 rpm. Thereafter, a gas mixture of TFE/VdF = 2/98 mol% was charged until the pressure reached 1.3 MPaG and 1 g of ethyl acetate was further charged, and then 1 g of a 50 mass% solution of di-n-propyl peroxydicarbonate in methanol was added thereto, so that the polymerization was started. Since the pressure inside the system decreased as the polymerization proceeded, a gas mixture of tetrafluoroethylene/1,1-difluoroethylene = 8/92 mol% was continually supplied so that the pressure inside the system was maintained at 1.3 MPaG. The stirring was continued for 10 hours. Then, the pressure was released to atmospheric pressure, and the reaction product was washed with water and dried. Thereby, 70 g of white powder of a fluoropolymer G was obtained.

The resulting fluoropolymer G had the following composition and weight average molecular weight.
VdF/TFE = 95.0/5.0 (mol%)
Weight average molecular weight: 280,000

(Example 8)

A slurry for composite porous membrane, a separator, and a secondary battery were produced by the same procedure as in Example 4 except that the fluoropolymer A of Example 1 was used instead of the fluoropolymer D of Example 4.

(Comparative Example 1)

A slurry for composite porous membrane, a separator, and a secondary battery were produced by the same procedure as in Example 1 except that the following fluoropolymer aqueous dispersion H was used instead of the fluoropolymer aqueous dispersion A used in Example 1.

<Preparation of fluoropolymer H>

A 3-L-capacity SUS polymerization tank equipped with a stirrer was charged with an aqueous solution containing $F(CF_2)_5COONH_4$ at a concentration of 3300 ppm and $CH_2=CFCF_2OCF(CF_3)CF_2OCF(CF_3)COONH_4$ at a concentration of 200 ppm, and sealed. The inside of the tank was purged with nitrogen in vacuo and evacuated, and then isopropyl alcohol serving as a chain-transfer agent in an amount corresponding to 1000 cc was put into the tank under vacuum suction using a syringe. Then, a monomer gas mixture of VdF/TFE at a ratio of 35/65 mol% was put into the tank until the pressure reached 0.8 MPaG under stirring at 450 rpm at 70°C. Thereafter, an aqueous solution containing ammonium persulfate in an amount corresponding to 100 ppm dissolved therein was injected with nitrogen, so that the reaction was started. In order to maintain the pressure inside the tank, a monomer mixture of VdF/TFE at a ratio of 35/65 mol% was additionally put into the tank. When the amount of the additional monomer reached 346 g, the stirring rate was reduced to a slow rate and the gas inside the tank was released, so that the reaction was finished. The inside of the tank was cooled down, and thereby an aqueous dispersion H having a solid polymer equivalent of 20 mass% was obtained.

The fluoropolymer H in the resulting aqueous dispersion H had the following composition and weight average molecular weight.
VdF/TFE = 35.0/65.0 (mol%)
Weight average molecular weight: 1,500,000
The resulting aqueous dispersion H had the following average primary particle size and surface tension.
Average primary particle size: 140 nm
Surface tension: 48 mN/m

(Comparative Example 2)

A slurry for composite porous membrane, a separator, and a secondary battery were produced by the same procedure as in Example 1 except that the following fluoropolymer aqueous dispersion I was used instead of the fluoropolymer aqueous dispersion A used in Example 1.

<Preparation of fluoropolymer I>

A 3-L-capacity SUS polymerization tank equipped with a stirrer was charged with an aqueous solution containing $F(CF_2)_5COONH_4$ at a concentration of 3300 ppm and $CH_2=CFCF_2OCF(CF_3)CF_2OCF(CF_3)COONH_4$ at a concentration of 200 ppm, and sealed. The inside of the tank was purged with nitrogen in vacuo and evacuated, and then isopropyl alcohol serving as a chain-transfer agent in an amount corresponding to 1200 cc was put into the tank under vacuum suction using a syringe. Then, a monomer gas mixture of VdF/TFE at a ratio of 67/33 mol% was put into the tank until the pressure reached 0.8 MPaG under stirring at 450 rpm at 70°C. Thereafter, an aqueous solution containing ammonium persulfate in an amount corresponding to 100 ppm dissolved therein was injected with nitrogen, so that the reaction was started. In order to maintain the pressure inside the tank, a monomer mixture of VdF/TFE at a ratio of 67/33 mol% was additionally put into the tank. When the amount of the additional monomer reached 346 g, the stirring rate was reduced to a slow rate and the gas inside the tank was blown, so that the reaction was finished. The inside of the tank was cooled down, and thereby an aqueous dispersion I having a solid polymer equivalent of 20 mass% was obtained.

The fluoropolymer I in the resulting aqueous dispersion I had the following composition and weight average molecular weight.
VdF/TFE = 67.0/33.0 (mol%)
Weight average molecular weight: 100,000
The resulting aqueous dispersion I had the following average primary particle size and surface tension.
Average primary particle size: 110 nm

Surface tension: 48 mN/m

(Comparative Example 3)

A slurry for composite porous membrane, a separator, and a secondary battery were produced by the same procedure as in Example 4 except that the following fluoropolymer J was used instead of the fluoropolymer D used in Example 4.

<Preparation of fluoropolymer J>

A 4-L-capacity autoclave was charged with 1.3 kg of pure water and sufficiently purged with nitrogen. Then, 0.88 kg of octafluorocyclobutane was put thereinto, and the system was maintained at an internal temperature of 37°C and a stirring rate of 555 rpm. Thereafter, a gas mixture of TFE/VdF = 5/95 mol% was charged until the pressure reached 1.3 MPaG, and then 1.5 g of a 50 mass% solution of di-n-propyl peroxydicarbonate in methanol was added thereto, so that the polymerization was started. Since the pressure inside the system decreased as the polymerization proceeded, a gas mixture of TFE/VdF = 15/85 mol% was continually supplied so that the pressure inside the system was maintained at 1.3 MPaG. The stirring was continued for 5 hours. Then, the pressure was released to atmospheric pressure, and the reaction product was washed with water and dried. Thereby, 57 g of white powder of a fluoropolymer J was obtained.

The resulting fluoropolymer J had the following composition and weight average molecular weight.
VdF/TFE = 85.0/15.0 (mol%)
Weight average molecular weight: 100,000

(Comparative Example 4)

A slurry for composite porous membrane, a separator, and a secondary battery were produced by the same procedure as in Example 4 except that the following fluoropolymer K was used instead of the fluoropolymer D used in Example 4.

<Preparation of fluoropolymer K>

A 4-L-capacity autoclave was charged with 1.3 kg of pure water and sufficiently purged with nitrogen. Then, 1.3 g of octafluorocyclobutane was put thereinto, and the system was maintained at an internal temperature of 37°C and a stirring rate of 580 rpm. Thereafter, a gas mixture of tetrafluoroethylene (TFE)/1,1-difluoroethylene (vinylidene fluoride (VdF)) = 2/98 mol% was charged until the pressure reached 1.3 MPaG and 1 g of ethyl acetate was charged, and then 1 g of a 50 mass% solution of di-n-propyl peroxydicarbonate in methanol was added thereto, so that the polymerization was started. Since the pressure inside the system decreased as the polymerization proceeded, a gas mixture of tetrafluoroethylene/1,1-difluoroethylene = 8/92 mol% was continually supplied so that the pressure inside the system was maintained at 1.3 MPaG. The stirring was continued for five hours. Then, the pressure was released to atmospheric pressure, and the reaction product was washed with water and dried. Thereby, 33 g of white powder of a fluoropolymer K was obtained.

The resulting fluoropolymer K had the following composition and weight average molecular weight.
VdF/TFE = 95.0/5.0 (mol%)
Weight average molecular weight: 100,000

(Comparative Example 5)

A slurry for composite porous membrane, a separator, and a secondary battery were produced by the same procedure as in Example 1 except that a vinylidene fluoride-hexafluoropropylene (HFP) copolymer (containing 5 mol% of hexafluoropropylene) was used instead of the fluoropolymer A used in Example 1.

(Comparative Example 6)

A slurry for composite porous membrane, a separator, and a secondary battery were produced by the same procedure as in Example 1 except that a vinylidene fluoride-hexafluoropropylene copolymer (containing 18 mol% of hexafluoropropylene) was used instead of the fluoropolymer A used in Example 1.

(Comparative Example 7)

Polyvinylidene fluoride (KF7200, Kureha Advanced Material Co., Ltd.) was used instead of the fluoropolymer D used in Example 4. A slurry for composite porous membrane, a separator, and a secondary battery were produced by the same procedure as in Example 4 except that a solution of polyvinylidene fluoride in N-methyl vinylpyrrolidone (NMP) was used and the slurry for composite porous membrane applied was dried at 110°C in production of the slurry for composite porous membrane and of the composite porous membrane.

(Comparative Example 8)

A slurry for composite porous membrane, a separator, and a secondary battery were produced by the same procedure as in Example 1 except that polyacrylate (Polysol AP-4375, Showa Denko K. K.) was used instead of the fluoropolymer A used in Example 1.

(Comparative Example 9)

Polyaramid (polyaramid, Nippon Kodoshi Corp.) was used instead of the polyvinylidene fluoride used in Comparative Example 7. A slurry for composite porous membrane, a separator, and a secondary battery were produced by the same procedure as in Comparative Example 7 except that the ratio between alumina and polyaramid was changed to alumina/polyaramid = 70/30 (mass%) in production of the composite porous membrane.

(Comparative Example 10)

A secondary battery was produced using a polyolefin porous film (polypropylene, thickness: 22 μm) with no composite porous membrane formed thereon.

The composite porous membrane binder polymers used in Examples 1 to 8 and Comparative Examples 1 to 10, and the separators and secondary batteries obtained therein were evaluated as follows. The results are shown in Tables 1 and 2.

<Evaluation of swellability of composite porous membrane binder polymer with electrolyte solution>

A solution (5 mass%) of the composite porous membrane binder polymer in NMP was cast on a glass Petri dish and vacuum dried at 120°C. Thereby, a film of the binder polymer was produced. The resulting film was cut out into a size of 5 × 20 mm, and then put into a sample bottle containing an electrolyte solution (a solution prepared by dissolving $LiPF_6$ in a solvent of ethylene carbonate and ethyl methyl carbonate (3:7 by volume) so as to have a concentration of 1 M) and left to stand at 80°C for two days. The increment from the weight before the immersion to the weight after the immersion was calculated, so that the swellability with an electrolyte solution was evaluated.

<Ion conductivity of composite porous membrane binder polymer>

A solution (5 mass%) of the composite porous membrane binder polymer in NMP was cast on a glass Petri dish and vacuum dried at 120°C. Thereby, a film of the binder polymer was produced. The resulting film was immersed in an electrolyte solution (a solution prepared by dissolving $LiPF_6$ in a solvent of ethylene carbonate and ethyl methyl carbonate (3:7 by volume) so as to have a concentration of 1 M) for 10 minutes. Then, the film was sandwiched between SUS electrodes and connected to a potentiostat/galvanostat (frequency analyzer: model 1260, Solartron Analytical; potentiostat: model 1287, Solartron Analytical) and the ion conductivity (S/cm) was measured by an alternating current impedance method (frequency: $10^{-3}$ to $10^6$ Hz, AC voltage: 10 mV). The evaluation was in accordance with the following criteria.

A: The ion conductivity was not lower than $1 \times 10^{-5}$ but lower than $10 \times 10^{-5}$.
B: The ion conductivity was not lower than $1 \times 10^{-6}$ but lower than $10 \times 10^{-6}$.
C: The ion conductivity was not lower than $1 \times 10^{-7}$ but lower than $10 \times 10^{-8}$.

<Evaluation of adhesiveness of separator>

A separator was produced including a composite porous membrane on one surface of a polyolefin porous film (polypropylene, thickness: 22 μm). The surface opposite to the surface including the composite porous membrane formed thereon of this separator was fixed on a glass substrate with a double-sided tape, and a transparent tape (3M

Co.) was stuck to the composite porous membrane. Next, a tensile strength test was performed using a universal material tester, and thereby a force (peel strength) necessary for peeling off the tape was determined. The adhesiveness was evaluated in accordance with the following criteria.

Excellent: The peel strength was not lower than 0.2 N/cm.

Good: The peel strength was not lower than 0.05 N/cm but lower than 0.2 N/cm.

Acceptable: The peel strength was lower than 0.05 N/cm.

<Evaluation of dust fall from separator>

The separator was cut out into a size of 4 cm square and put into a 500-cc glass beaker. The system was shaken using a shaker for four hours at 200 rpm. After the shaking, the presence or absence of dust fall of the composite porous membrane from the polyolefin separator substrate was visually observed.

<Evaluation of high-temperature heat stability of secondary battery>

The lithium ion secondary battery was put into a 25°C temperature-constant chamber, and was subjected to three cycles of constant-current/constant-voltage charging rated at 0.2C to 0.05C and constant-current discharging rated at 0.2C within the voltage range of 4.35 to 3.0 V in an alternate manner. Next, the charged/discharged battery was put into a 120°C temperature-constant chamber for 10 hours, and then the cell voltage was measured. If the separator is heat-shrunk and the positive electrode and the negative electrode are therefore in direct contact with each other, the cell voltage drastically decreases. The high-temperature heat stability was evaluated in accordance with the following criteria.

Good: The voltage was 2.5 V or higher (the voltage did not reach 0.5 V or lower).

Poor: The voltage was 0.5 V or lower.

<Evaluation of high-rate performance of secondary battery>

The lithium ion secondary battery was put into a 25°C temperature-constant chamber, and was charged to 4.35 V by a constant-current/constant-voltage method at 0.5C to 0.05C rate and discharged to 3 V by a constant current method at 0.5C. Thereby, the discharge capacity at 0.5C was determined. Next, the battery was charged to 4.35 V by a constant-current/constant-voltage method at 0.5C to 0.05C and discharged to 3 V by a constant current method at 3C. Thereby, the discharge capacity at 3C was determined. An average value of the values of 5 cells was determined as the measured value, and the high-rate performance was evaluated based on the ratio between the discharge capacity at 3C and the discharge capacity at 0.5C (discharge capacity at 3C/discharge capacity at 0.5C (%)).

<Evaluation of high-temperature cycle performance of secondary battery>

The lithium ion secondary battery was put into a 60°C temperature-constant chamber, and was subjected to 200 cycles of constant-current/constant-voltage charging rated at 1C to 0.05C and constant-current discharging rated at 1C within the voltage range of 4.35 to 3.0 V in an alternate manner. An average value of the values of 5 cells was determined as the measured value, and the high-temperature cycle performance was evaluated based on the ratio between the discharge capacity in the 1st cycle and the discharge capacity in the 200th cycle (discharge capacity in 200th cycle/discharge capacity in 1st cycle (%)).

<Evaluation of high-voltage durability of secondary battery>

The lithium ion secondary battery was put into a 25°C temperature-constant chamber, and was charged to 4.4 V by a constant-current/constant-voltage method at 0.5C to 0.05C. Then, the initial resistance was measured using an AC impedance measurement device. Next, the cell was stored in a 40°C temperature-constant chamber for one week, and then put into a 25°C temperature-constant chamber for three hours so that the cell temperature was decreased to 25°C. Then, the resistance of the cell was measured so that the resistance after the durability test was determined. An average value of the values of 5 cells was determined as the measured value, and the high-voltage durability was evaluated on the basis of the increasing rate of the resistance after the durability test to the initial resistance ({(resistance after durability test) - (initial resistance)}/(initial resistance) (%)).

[Table 1]

| | | Example 1 | Example 2 | Example 3 | Example 4 | Example 5 | Example 6 | Example 7 | Example 8 |
|---|---|---|---|---|---|---|---|---|---|
| Composite porous membrane binder polymer | Composition of polymer (mol%) | VdF/TFE = 67/33 | VdF/TFE = 67/33 | VdF/TFE = 67/33 | VdF/TFE = 85/15 | VdF/TFE = 85/15 | VdF/TFE = 95/5 | VdF/TFE = 95/5 | VdF/TFE = 67/33 |
| | Weight average molecular weight | 1,400,000 | 800,000 | 350,000 | 1,200,000 | 350,000 | 1,200,000 | 280,000 | 1,400,000 |
| | Swellability with electrolyte solution at 80°C | + 20 wt% | + 18 wt% | + 23 wt% | + 25 wt% | + 28 wt% | + 23 wt% | + 20 wt% | + 25 wt% |
| | Ion conductivity | A | A | A | A | A | A | A | A |
| Amount of binder polymer in composite porous membrane | | 20 wt% | 20 wt% | 20 wt% | 20 wt% | 20 wt% | 20 wt% | 20 wt% | 20 wt% |
| Evaluated parameters | Adhesiveness of separator | Excelent | Excellent | Good | Excellent | Good | Excellent | Good | Excellent |
| | Dust fall of separator | Absent | Absent | Absent | Absent | Absent | Absent | Absent | Absent |
| | High-temperature heat stability of secondary battery | Good | Good | Good | Good | Good | Good | Good | Good |
| | High-rate performance at room temperature (25°C): (3C-rate capacity/0.5C-rate capacity) | 91% | 91% | 89% | 90% | 88% | 90% | 88% | 90% |
| | High-temperature (60°C) cycle performance: capacity retention after 200 cycles | 90% | 91% | 87% | 89% | 87% | 86% | 85% | 89% |
| | High-voltage (4.4 V) durability: internal resistance after 4.4 V charge and 1-week storage at 40°C | + 95% | + 100% | + 105% | + 100% | + 105% | + 115% | + 120% | + 105% |

[Table 2]

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|
| Composite membrane binder polymer | Composition of polymer (mol%) | VdF/HFP = 35/65 | VdF/TFE = 67/33 | VdF/TFE = 85/15 | VdF/TFE = 95/5 | VdF/HFP = 95/5 | VdF/HFP = 82/18 | PVdF-Homopolymer | Polyacrylate | Polyaramid | - |
| | Weight average molecular weight | 1,500,000 | 100,000 | 100,000 | 100,000 | 730,000 | 300,000 | 1,000,000 | - | - | - |
| | Swellability with electrolyte solution at 80°C | + 10 wt% | + 25 wt% | + 30 wt% | + 25 wt% | + 300 wt% (partially dissolved) | + 400 wt% (partially dissolved) | + 20 wt% | + 50 wt% | + 30 wt% | - |
| | Ion conductivity | B | A | A | A | A | A | B | B | C | - |
| Amount of binder polymer in composite porous membrane | | 20 wt% | 20 wt% | 20 wt% | 20 wt% | 20 wt% | 20 wt% | 20 wt% | 20wt% | 30 wt% | 0 wt% |

(continued)

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|
| Evaluated parameters | Adhesiveness of separator | Acceptable | Acceptable | Acceptable | Acceptable | Good | Acceptable | Good | Acceptable | Excellent | - |
| | Dustfall of separator | Present | Present | Present | Present | Present | Present | Absent | Absent | Absent | - |
| | High-temperature heat stability of secondary battery | Good | Good | Good | Good | Poor | Poor | Good | Good | Good | Poor |
| | High-rate performance at room temperature (25°C): (3C-rate capacity/0.5C-rate capacity) | 82% | 88% | 87% | 87% | 89% | 88% | 84% | 82% | 82% | - |
| | High-temperature (60°C) cycle performance; capacity retention after 200 cycles | 76% | 79% | 78% | 78% | 72% | 65% | 82% | 76% | 79% | - |
| | High-voltage (4.4 V) durability. internal resistance after 4.4 V charge and 1-week storage at 40°C | + 100% | + 125% | + 125% | + 130% | + 135% | + 140% | + 195% | + 280% | + 270% | - |

(Evaluations of Examples 1 to 8 and Comparative Examples 1 to 10)

Tables 1 and 2 show that the separator of the present invention achieved firm adhesion of the composite porous membrane to the polyolefin separator substrate so that no dust fall of the composite porous membrane occurred, and had improved high-temperature heat stability in comparison with a conventional polyolefin separator (Comparative Example 10). In the cases of using the separator for a secondary battery, the secondary battery achieved good high-rate performance and high-temperature cycle performance, and was excellent in durability under high-voltage storage conditions (Examples 1 to 8). In the case of using a vinylidene fluoride/tetrafluoroethylene copolymer having a vinylidene fluoride content of 35 mol% as a binder of the composite porous membrane, the adhesiveness of the composite porous membrane to the separator substrate was weak and much dust fall occurred (Comparative Example 1). Also, in the cases of using a vinylidene fluoride/tetrafluoroethylene copolymer having a small weight average molecular weight as a binder of the composite porous membrane, as in Comparative Examples 2 to 4, the composite porous membrane insufficiently adhered to the separator substrate. If the adhesion between the separator substrate and the composite porous membrane was weak, as in Comparative Examples 1 to 4, the capacity of the secondary battery greatly decreased after repeated charge/discharge cycles, so that the durability of the battery was poor.

In the case of using a vinylidene fluoride/hexafluoropropylene copolymer as a binder for forming the composite porous membrane, the binder polymer itself was dissolved in a carbonate solvent in a high-temperature environment at 120°C. Thus, no effect of improving the high-temperature heat stability was observed and the battery was short-circuited. Further, the vinylidene fluoride/hexafluoropropylene copolymer serving as a binder polymer excessively swelled with an electrolyte solution even in an 80°C environment. Thus, the high-temperature cycle performance of the secondary battery was markedly poor (Comparative Examples 5 and 6).

In the cases of using a polyvinylidene fluoride homopolymer as a binder for forming the composite porous membrane, the binder itself had a lower ion conductivity than the polyvinylidene fluoride copolymer of the present invention and had no tetrafluoroethylene unit introduced therein. Thus, the resulting secondary battery was poor in high-rate discharge performance and durability at a high voltage (Comparative Example 7).

Further, in the cases of using a non-fluorinated polymer having a polar functional group, such as polyacrylate or polyaramid, as a binder for the composite porous membrane, the resulting secondary battery was poor in high-voltage durability (Comparative Examples 8 and 9).

(Example 9)

A slurry for composite porous membrane, a separator, and a secondary battery were produced by the same procedure as in Example 1 except that the ratio of alumina/fluoropolymer A/carboxymethyl cellulose in the composite porous membrane in Example 1 was changed to 88/10/2 (mass%).

(Example 10)

A slurry for composite porous membrane, a separator, and a secondary battery were produced by the same procedure as in Example 1 except that the ratio of alumina/fluoropolymer A/carboxymethyl cellulose in the composite porous membrane in Example 1 was changed to 68/30/2 (mass%).

(Comparative Example 11)

A slurry for composite porous membrane, a separator, and a secondary battery were produced by the same procedure as in Example 1 except that the ratio of alumina/fluoropolymer A/carboxymethyl cellulose in the composite porous membrane in Example 1 was changed to 38/60/2 (mass%).

(Comparative Example 12)

A slurry for composite porous membrane, a separator, and a secondary battery were produced by the same procedure as in Example 1 except that the ratio of alumina/fluoropolymer A/carboxymethyl cellulose in the composite porous membrane in Example 1 was changed to 18/80/2 (mass%).

(Comparative Example 13)

A slurry for composite porous membrane, a separator, and a secondary battery were produced by the same procedure as in Example 1 except that the ratio of alumina/fluoropolymer A/carboxymethyl cellulose in the composite porous membrane in Example 1 was changed to 8/90/2 (mass%).

(Comparative Example 14)

A slurry for composite porous membrane, a separator, and a secondary battery were produced by the same procedure as in Example 4 except that the proportion of the fluoropolymer D in the composite porous membrane of Example 4 was changed to 60 mass%.

(Comparative Example 15)

A slurry for composite porous membrane, a separator, and a secondary battery were produced by the same procedure as in Example 4 except that the proportion of the fluoropolymer D in the composite porous membrane of Example 4 was changed to 80 mass%.

(Comparative Example 16)

A slurry for composite porous membrane, a separator, and a secondary battery were produced by the same procedure as in Example 4 except that the proportion of the fluoropolymer D in the composite porous membrane of Example 4 was changed to 90 mass%.

The separators and the secondary batteries of Examples 9 and 10 and Comparative Examples 11 to 16 were evaluated for the same parameters as in Example 1. The results are shown in Table 3 together with the results of Example 1 and Example 4.

[Table 3]

| | | Example 1 | Example 4 | Example 9 | Example 10 | Comparative Example 11 | Comparative Example 12 | Comparative Example 13 | Comparative Example 14 | Comparative Example 15 | Comparative Example 16 |
|---|---|---|---|---|---|---|---|---|---|---|---|
| Composite membrane polymer | Composition of polymer (mol%) | VdF/TFE = 67/33 | VdF/TFE = 85/15 | VdF/TFE = 67/33 | VdF/TFE = 67/33 | VdF/TFE = 67/33 | VdF/TFE = 67/33 | VdF/TFE = 67/33 | VdF/TFE = 85/15 | VdF/TFE = 85/15 | VdF/TFE = 85/15 |
| | Weight average molecular weight | 1,400,000 | 1,200,000 | 1,400,000 | 1,400,000 | 1,400,000 | 1,400,000 | 1,400,000 | 1,200,000 | 1,200,000 | 1,200,000 |
| | Swellability with electrolyte solution | + 20 wt% | + 25 wt% | + 20 wt% | + 20 wt% | + 20 wt% | + 20 wt% | + 20 wt% | + 25 wt% | + 25 wt% | + 25 wt% |
| | Ion conductivity | A | A | A | A | A | A | A | A | A | A |
| Amount of binder polymer in composite porous membrane | | 20 wt% | 20 wt% | 10 wt% | 30 wt% | 60 wt% | 80 wt% | 90 wt% | 60 wt% | 80 wt% | 90 wt% |

(continued)

| | | Example 1 | Example 4 | Example 9 | Example 10 | Comparative Example 11 | Comparative Example 12 | Comparative Example 13 | Comparative Example 14 | Comparative Example 15 | Comparative Example 16 |
|---|---|---|---|---|---|---|---|---|---|---|---|
| Evaluated parameters | Adhesiveness of separator | Excellent | Excellent | Excelent | Excellent | Excellent | Excelent | Excellent | Excellent | Excellent | Excelent |
| | Dust fall of separator | Absent | Absent | Absent | Absent | Absent | Absent | Absent | Absent | Absent | Absent |
| | High-temperature heat stability of secondary battery | Good | Good | Good | Good | Poor | Poor | Poor | Poor | Poor | Poor |
| | High-rate performanceat room temperature (25°C): (3C-rate capacity/0.5C-rate capacity) | 91% | 90% | 91% | 92% | 71% | - | - | 73% | - | - |
| | High-temperature (60°C) cycle capacity retention after 200 cycles | 90% | 89% | 89% | 89% | 55% | - | - | 50% | - | - |
| | High-voltage (4.4 V) durability: internal resistance after 4.4 V charge and 1-week storage at 40°C | + 95% | + 100% | + 95% | + 100% | - | - | - | - | - | - |

(Evaluation of Example 1, Example 4, Examples 9 and 10, and Comparative Examples 11 to 16)

Table 3 shows that, if the proportion of the binder polymer (vinylidene fluoride/tetrafluoroethylene copolymer) in the composite porous membrane formed on the polyolefin separator substrate was more than 50 mass%, as in Comparative Examples 11 to 16, not only the polyolefin separator substrate but also the composite porous membrane were heat-shrunk in a high-temperature environment at 120°C, so that the heat stability of the separator was not improved. In contrast, in the cases of adjusting the proportion of the vinylidene fluoride/tetrafluoroethylene copolymer in the composite porous membrane to 50 mass% or less, as in Example 1, Example 4, Example 9, and Example 10, the separator was prevented from being heat-shrunk in a high-temperature environment, so that the heat stability of the separator was improved.

(Example 11)

In the <Preparation of fluoropolymer A> in Example 1, $C_{13}H_{27}O(CH_2CH_2O)_8H$ (HLB = 13.3, cloud point = 60°C) was added as a nonionic surfactant to the aqueous dispersion A after the emulsion polymerization. Thereby, an aqueous dispersion A' (surface tension: 27 mN/m, average primary particle size: 110 nm) was prepared in which the nonionic concentration was 0.5 mass% for 100 parts by mass of the aqueous dispersion after addition of the nonionic surfactant. A slurry for composite porous membrane, a separator, and a secondary battery were produced by the same procedure as in Example 1 except that this aqueous dispersion A' was used.

(Example 12)

In the <Preparation of fluoropolymer A> in Example 1, $C_{13}H_{27}O(CH_2CH_2O)_8H$ (HLB = 13.3, cloud point = 60°C) was added as a nonionic surfactant to the aqueous dispersion A after the emulsion polymerization. Thereby, an aqueous dispersion A" (surface tension: 22 mN/m, average primary particle size: 110 nm) was prepared in which the nonionic concentration was 1.0 mass% for 100 parts by mass of the aqueous dispersion after addition of the nonionic surfactant. A slurry for composite porous membrane, a separator, and a secondary battery were produced by the same procedure as in Example 1 except that this aqueous dispersion A" was used.

(Example 13)

<Preparation of fluoropolymer L>

A 3-L-capacity SUS polymerization tank equipped with a stirrer was charged with an aqueous solution containing $F(CF_2)_5COONH_4$ at a concentration of 3300 ppm and $CH_2=CFCF_2OCF(CF_3)CF_2OCF(CF_3)COONH_4$ at a concentration of 200 ppm, and sealed. The inside of the tank was purged with nitrogen in vacuo and evacuated, and then isopropyl alcohol serving as a chain-transfer agent in an amount corresponding to 400 cc was put into the tank under vacuum suction using a syringe. Then, a monomer gas mixture of vinylidene fluoride (VdF)/tetrafluoroethylene (TFE) at a ratio of 85/15 mol% was put into the tank until the pressure reached 0.8 MPaG under stirring at 450 rpm at 70°C. Thereafter, an aqueous solution containing ammonium persulfate in an amount corresponding to 100 ppm dissolved therein was injected with nitrogen, so that the reaction was started. In order to maintain the pressure inside the tank, a monomer mixture of VdF/TFE at a ratio of 85/15 mol% was additionally put into the tank. When the amount of the additional monomer reached 360 g, the stirring rate was reduced to a slow rate and the gas inside the tank was released, so that the reaction was finished. The inside of the tank was cooled down, and thereby an aqueous dispersion having a solid polymer equivalent of 20 mass% was obtained. To this aqueous dispersion was added $C_{13}H_{27}O(CH_2CH_2O)_8H$ (HLB = 13.3, cloud point = 60°C) as a nonionic surfactant, and thereby an aqueous dispersion L was prepared in which the nonionic concentration was 1.0 mass% for 100 parts by mass of the aqueous dispersion after addition of the nonionic surfactant.

The fluoropolymer L in the resulting aqueous dispersion L had the following composition and weight average molecular weight.
VdF/TFE = 85.0/15.0 (mol%)
Weight average molecular weight: 1,200,000
Melting point: 124°C
The resulting aqueous dispersion L had the following average primary particle size and surface tension.
Average primary particle size: 115 nm
Surface tension: 20 mN/m

A slurry for composite porous membrane, a separator, and a secondary battery were produced by the same procedure as in Example 1 except that the aqueous dispersion L was used.

<Evaluation of shake and storage stability of aqueous dispersions A', A", and L>

A 200-cc portion of each of the aqueous dispersions A', A", and L was put into a 250-cc polyethylene container, and the container was sealed. The polyethylene container was shaken for one week using a constant-temperature shaker (BT100, Yamato Scientific Co., Ltd.) at a shaking rate of 120 rpm and a temperature of 25°C, and then 1 cc of the aqueous dispersion was dropped on a glass plate (4 cm × 4 cm) and observed whether or not coarse particles were generated. In each aqueous dispersion, no coarse particles visible to the naked eye were observed. The particle size of the aqueous dispersion after the shaking test was measured using a dynamic light scattering particle size analyzer (ELSZ1000, Otsuka Electronics Co., Ltd.). In each aqueous dispersion, no particles having a particle size of 1 μm or greater were observed. The sample after the shaking test was left to stand and stored at 25°C for six months, and then subjected to the aforementioned visual observation of the dispersion dropped on a glass plate and dynamic light scattering particle size analysis. In each sample, neither coagulation nor precipitation of coarse particles of 1 μm or greater were observed.

These results prove that the aqueous dispersion mixed with a surfactant is excellent in shaking stability and causes neither coagulation nor precipitation of coarse particles even after long-term storage.

The separators and the secondary batteries in Examples 11 to 13 were evaluated for the same parameters as in Example 1. Table 4 shows the results.

[Table 4]

| | | Example 11 | Example 12 | Example 13 |
|---|---|---|---|---|
| Composite porous membrane binder polymer | Composition of polymer (mol%) | VdF/TFE = 67/33 | VdF/TFE = 67/33 | VdF/TFE = 85/15 |
| | Weight average molecular weight | 1,400,000 | 1,400,000 | 1,200,000 |
| | Swellability with electrolyte solution at 80°C | + 20 wt% | + 20 wt% | + 25 wt% |
| | Ion conductivity | A | A | A |
| Amount of binder polymer in composite porous membrane | | 20 wt% | 20 wt% | 20 wt% |
| Evaluated parameters | Adhesiveness of separator | Excellent | Excellent | Excellent |
| | Dust fall of separator | Absent | Absent | Absent |
| | High-temperature heat stability of secondary battery | Good | Good | Good |
| | High-rate performance at room temperature (25°C): (3C-rate capacity/0.5C-rate capacity) | 93% | 93% | 92% |
| | High-temperature (60°C) cycle performance: capacity retention after 200 cycles | 90% | 90% | 89% |
| | High-voltage (4.4 V) durability: internal resistance after 4.4 V charge and 1 -week storage at 40°C | + 95% | + 95% | + 100% |

(Example 14)

<Preparation of fluoropolymer M>

A 1.83-L-capacity SUS polymerization tank equipped with a stirrer was charged with a sodium secondary alkane sulfonate (1.71 g) and pure water (1070 g), and sealed. The inside of the tank was purged with nitrogen in vacuo and evacuated, and then a monomer gas mixture of VdF/TFE at a ratio of 65/35 mol% was put into the tank until the pressure reached 0.8 MPaG under stirring at 400 rpm at 70°C. Then, 0.1 g of ethyl acetate was injected with nitrogen. Next, an aqueous solution containing ammonium persulfate in an amount corresponding to 636 ppm dissolved therein was injected with nitrogen, so that the reaction was started. In order to maintain the pressure inside the tank, a monomer mixture of

VdF/TFE at a ratio of 65/35 mol% was additionally put into the tank. Further, ammonium persulfate in half an amount of the initial amount was additionally added every 1.5 hours, so that the reaction was continued. When the amount of the additional monomer reached 268 g, the stirring rate was reduced to a slow rate and the gas inside the tank was released, so that the reaction was finished. The inside of the tank was cooled down, and thereby an aqueous dispersion having a solid polymer equivalent of 20 mass% was obtained. To this aqueous dispersion were added a sodium secondary alkane sulfonate as an anionic surfactant and $C_{13}H_{27}O(CH_2CH_2O)_8H$ (HLB = 13.3, cloud point = 60°C) as a nonionic surfactant. Thereby, an aqueous dispersion M was prepared in which the anionic concentration was 0.3 mass% and the nonionic concentration was 1.0 mass% for 100 parts by mass of the aqueous dispersion after addition of the surfactants.

The fluoropolymer M in the resulting aqueous dispersion M had the following composition and weight average molecular weight.
VdF/TFE = 67.0/33.0 (mol%)
Weight average molecular weight: 230,000
The resulting aqueous dispersion M had the following average primary particle size and surface tension.
Average primary particle size: 135 nm
Surface tension: 24 mN/m

A slurry for composite porous membrane, a separator, and a secondary battery were produced by the same procedure as in Example 1 except that the aqueous dispersion M was used.

(Example 15)

<Preparation of fluoropolymer N>

A 1.83-L-capacity SUS polymerization tank equipped with a stirrer was charged with an aqueous solution containing $CH_2=CFCF_2OCF(CF_3)CF_2OCF(CF_3)COONH_4$ at a concentration of 200 ppm and paraffin wax (10 g), and sealed. The inside of the tank was purged with nitrogen in vacuo and evacuated, and then a monomer gas mixture of VdF/TFE at a ratio of 65/35 mol% was put into the tank until the pressure reached 1.15 MPaG under stirring at 80°C and 400 rpm. Then, an aqueous solution containing ammonium persulfate in an amount corresponding to 636 ppm dissolved therein was injected with nitrogen, so that the reaction was started. Further, ammonium persulfate in half an amount of the initial amount was additionally added every 1.5 hours, so that the reaction was continued. In order to maintain the pressure inside the tank, a monomer mixture of VdF/TFE at a ratio of 65/35 mol% was additionally put into the tank. When the amount of the additional monomer reached 268 g, the stirring rate was reduced to a slow rate and the gas inside the tank was blown, so that the reaction was finished. The inside of the tank was cooled down, and thereby an aqueous dispersion having a solid polymer equivalent of 20 mass% was obtained. To this aqueous dispersion were added a sodium secondary alkane sulfonate as an anionic surfactant and $C_{13}H_{27}O(CH_2CH_2O)_8H$ (HLB = 13.3, cloud point = 60°C) as a nonionic surfactant. Thereby, an aqueous dispersion N was prepared in which the anion concentration was 0.3 mass% and the nonionic concentration was 1.0 mass% for 100 parts by mass of the aqueous dispersion after addition of the surfactants.

The fluoropolymer N in the resulting aqueous dispersion N had the following composition and weight average molecular weight.
VdF/TFE = 67.0/33.0 (mol%)
Weight average molecular weight: 900,000
The resulting aqueous dispersion N had the following average primary particle size and surface tension.
Average primary particle size: 130 nm
Surface tension: 24 mN/m

A slurry for composite porous membrane, a separator, and a secondary battery were produced by the same procedure as in Example 1 except that the aqueous dispersion N was used. The concentration of the fluorinated surfactant in the dispersion prepared was 10 ppb or less based on the dispersion.

<Evaluation of shake and storage stability of aqueous dispersions M and N>

A 200-cc portion of each of the aqueous dispersions M and N was put into a 250-cc polyethylene container, and the container was sealed. The polyethylene container was shaken for one week using a constant-temperature shaker (BT100, Yamato Scientific Co., Ltd.) at a shaking rate of 120 rpm and a temperature of 25°C, and then 1 cc of the aqueous dispersion was dropped on a glass plate (4 cm × 4 cm) and observed whether or not coarse particles were generated. In each aqueous dispersion, no coarse particles visible to the naked eye were observed. The particle size of the aqueous dispersion after the shaking test was measured using a dynamic light scattering particle size analyzer (ELSZ1000, Otsuka Electronics Co., Ltd.). In each aqueous dispersion, no particles having a particle size of 1 μm or greater were observed. The sample after the shaking test was left to stand and stored at 25°C for six months, and then

subjected to the aforementioned visual observation of the dispersion dropped on a glass plate and dynamic light scattering particle size analysis. In each sample, neither coagulation nor precipitation of coarse particles of 1 μm or greater were observed.

These results prove that even an aqueous dispersion obtained by emulsion polymerization without a perfluoroalkyl emulsifier, such as $F(CF_2)_5COONH_4$, is also excellent in shaking stability and causes neither coagulation nor precipitation of coarse particles even after long-term storage.

The separators and the secondary batteries in Examples 14 and 15 were evaluated for the same parameters as in Example 1.

Table 5 shows the results. Even the aqueous dispersion obtained by emulsion polymerization without a non-reactive fluorine-containing emulsifier, such as $F(CF_2)_5COONH_4$, was found to achieve improved heat-resistant stability of the separator and improved battery characteristics.

[Table 5]

| | | Example 14 | Example 15 |
|---|---|---|---|
| Composite porous membrane binder polymer | Composition of polymer (mol%) | VdF/TFE = 67/33 | VdF/TFE = 67/33 |
| | Weight average molecular weight | 230,000 | 900,000 |
| | Swellability with electrolyte solution at 80°C | + 19 wt% | + 23 wt% |
| | Ion conductivity | A | A |
| Amount of binder polymer in composite porous membrane | | 20 wt% | 20 wt% |
| Evaluated parameters | Adhesiveness of separator | Good | Excellent |
| | Dust fall of separator | Absent | Absent |
| | High-temperature heat stability of secondary battery | Good | Good |
| | High-rate performance at room temperature (25°C): (3C-rate capacity/0.5C-rate capacity) | 89% | 91% |
| | High-temperature (60°C) cycle performance: capacity retention after 200 cycles | 87% | 91% |
| | High-voltage (4.4 V) durability: internal resistance after 4.4 V charge and 1-week storage at 40°C | + 105% | + 100% |

(Example 16)

A slurry for composite porous membrane, a separator, and a secondary battery were produced by the same procedure as in Example 15 except that a high-purity silica powder (average particle size: 0.016 μm) was used instead of the high-purity alumina powder (average particle size: 0.013 μm) used in Example 15.

(Example 17)

A slurry for composite porous membrane, a separator, and a secondary battery were produced by the same procedure as in Example 15 except that a crosslinked polymethacrylate (average particle size: 1 μm) was added in production of the slurry for composite porous membrane in Example 15 so as to give a ratio of alumina/crosslinked polymethacrylate (average particle size: 1 μm)/fluoropolymer N/carboxymethyl cellulose in the slurry for composite porous membrane of 65/13/20/2 (mass%).

The separators and the secondary batteries in Examples 16 and 17 were evaluated for the same parameters as in Example 1.

Table 6 shows the results.

[Table 6]

| | | Example 16 | Example 17 |
|---|---|---|---|
| Composite porous membrane binder polymer | Composition of polymer (mol%) | VdF/TFE = 67/33 | VdF/TFE = 67/33 |
| | Weight average molecular weight | 900,000 | 900,000 |
| | Swellability with electrolyte solution at 80°C | + 23 wt% | + 26 wt% |
| | Ion conductivity | A | A |
| Amount of binder polymer in composite porous membrane | | 20 wt% | 20 wt% |
| Evaluated parameters | Adhesiveness of separator | Excellent | Excellent |
| | Dust fall of separator | Absent | Absent |
| | High-temperature heat stability of secondary battery | Good | Good |
| | High-rate performance at room temperature (25°C): (3C-rate capacity/0.5C-rate capacity) | 90% | 92% |
| | High-temperature (60°C) cycle performance: capacity retention after 200 cycles | 92% | 93% |
| | High-voltage (4.4 V) durability: internal resistance after 4.4 V charge and 1-week storage at 40°C | + 105% | + 100% |

INDUSTRIAL APPLICABILITY

The separator for secondary batteries of the present invention is excellent in adhesiveness between the porous substrate and the composite porous membrane, and can provide a secondary battery excellent in electric properties and heat resistance.

## Claims

1. A separator for secondary batteries, comprising:

    a porous substrate; and
    a composite porous membrane disposed on or above the porous substrate,
    the composite porous membrane comprising:

        a fluoropolymer that includes a polymerized unit based on vinylidene fluoride and a polymerized unit based on tetrafluoroethylene; and
        at least one type of inorganic particles selected from the group consisting of metal oxide particles and metal hydroxide particles,

    the fluoropolymer including 40 mol% or more of the polymerized unit based on vinylidene fluoride in all the polymerized units and having a weight average molecular weight of 200,000 to 2,000,000,
    the fluoropolymer being present in an amount of 50 mass% or less in the composite porous membrane,
    wherein the fluoropolymer further includes less than 3.0 mol% of a polymerized unit based on a monomer copolymerizable with vinylidene fluoride and tetrafluoroethylene in addition to the vinylidene fluoride unit and the tetrafluoroethylene unit, in all the polymerized units of the fluoropolymer.

2. The separator for secondary batteries according to claim 1,
wherein the composite porous membrane further comprises organic particles.

**3.** The separator for secondary batteries according to claim 1 or 2, wherein the porous substrate comprises at least one resin selected from the group consisting of polyethylene, polypropylene, polyimide, polyamide, polyethylene terephthalate, polyester, and polyacetal.

**4.** The separator for secondary batteries according to claim 1, 2, or 3, wherein the inorganic particles are present in an amount of 50 to 99 mass% in the composite porous membrane.

**5.** A secondary battery comprising:

the separator for secondary batteries according to claim 1, 2, 3, or 4;
a positive electrode;
a negative electrode; and
a non-aqueous electrolyte solution.

**Patentansprüche**

**1.** Separator für Sekundärbatterien, umfassend:

ein poröses Substrat; und
eine poröse Verbundmembran, die auf oder über dem porösen Substrat angeordnet ist,
wobei die poröse Verbundmembran umfasst:

ein Fluorpolymer, das eine polymerisierte Einheit auf Basis von Vinylidenfluorid und eine polymerisierte Einheit auf Basis von Tetrafluorethylen umfasst; und
mindestens eine Art von anorganischen Teilchen, ausgewählt aus der Gruppe, bestehend aus Metalloxidteilchen und Metallhydroxidteilchen,

wobei das Fluorpolymer 40 mol% oder mehr der polymerisierten Einheit auf Basis von Vinylidenfluorid in allen polymerisierten Einheiten enthält und ein gewichtsmittleres Molekulargewicht von 200.000 bis 2.000.000 aufweist,

das Fluorpolymer in eine Menge von 50 Massen-% oder weniger in der porösen Verbundmembran vorhanden ist,
worin das Fluorpolymer ferner zusätzlich zu der Vinylidenfluorideinheit und der Tetrafluorethyleneinheit weniger als 3,0 mol% einer polymerisierten Einheit auf Basis eines mit Vinylidenfluorid und Tetrafluorethylen copolymerisierbaren Monomers in allen polymerisierten Einheiten des Fluorpolymers enthält.

**2.** Separator für Sekundärbatterien gemäß Anspruch 1, worin die poröse Verbundmembran ferner organische Teilchen umfasst.

**3.** Separator für Sekundärbatterien gemäß Anspruch 1 oder 2, worin das poröse Substrat mindestens ein Harz umfasst, ausgewählt aus der Gruppe bestehend aus Polyethylen, Polypropylen, Polyimid, Polyamid, Polyethylenterephthalat, Polyester und Polyacetal.

**4.** Separator für Sekundärbatterien gemäß Anspruch 1, 2 oder 3, worin die anorganischen Teilchen in einer Menge von 50 bis 99 Massen-% in der porösen Verbundmembran vorhanden sind.

**5.** Sekundärbatterie, umfassend:

den Separator für Sekundärbatterien gemäß Anspruch 1, 2, 3 oder 4;
eine positive Elektrode;
eine negative Elektrode; und
eine nichtwässrige Elektrolytlösung.

## Revendications

1. **1.** Séparateur pour batteries rechargeables, comprenant :

   un substrat poreux ; et
   une membrane poreuse composite disposée sur ou au-dessus du substrat poreux, la membrane poreuse composite comprenant :

      un fluoropolymère qui inclut une unité polymérisée à base de fluorure de vinylidène et une unité polymérisée à base de tétrafluoroéthylène ; et
      au moins un type de particules inorganiques sélectionnées à partir du groupe constitué par des particules d'oxyde métallique et des particules d'hydroxyde métallique,

   le fluoropolymère incluant 40 % en mole ou plus de l'unité polymérisée à base de fluorure de vinylidène dans toutes les unités polymérisées et ayant un poids moléculaire moyen en poids de 200 000 à 2 000 000,
   le fluoropolymère étant présent en une quantité de 50 % en masse ou moins dans la membrane poreuse composite,
   dans lequel le fluoropolymère inclut en outre moins de 3,0 % en mole d'une unité polymérisée à base de monomère pouvant être copolymérisé avec du fluorure de vinylidène et du tétrafluoroéthylène en plus de l'unité de fluorure de vinylidène et de l'unité de tétrafluoroéthylène, dans toutes les unités polymérisées du fluoropolymère.

**2.** Séparateur pour batteries rechargeables selon la revendication 1,
dans lequel la membrane poreuse composite comprend en outre des particules organiques.

**3.** Séparateur pour batteries rechargeables selon la revendication 1 ou 2,
dans lequel le substrat poreux comprend au moins une résine sélectionnée dans le groupe constitué par du polyéthylène, du polypropylène, du polyimide, du polyamide, du polytéréphtalate d'éthylène, du polyester et du polyacétal.

**4.** Séparateur pour batteries rechargeables selon la revendication 1, 2, ou 3,
dans lequel les particules inorganiques sont présentes en une quantité de 50 à 99 % en masse dans la membrane poreuse composite.

**5.** Batterie rechargeable comprenant :

   le séparateur pour batteries rechargeables selon la revendication 1, 2, 3, ou 4 ;
   une électrode positive ;
   une électrode négative ; et
   une solution électrolytique non aqueuse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008524824 T
- JP 2011515799 T
- JP 2008266593 A
- WO 2011096564 A
- JP H06172452 A
- JP H07201316 A